# EUROPEAN PATENT APPLICATION

(11) **EP 3 499 356 A1**
(43) Date of publication of application: **19.06.2019**
(21) Application number: 17842546.8
(22) Date of filing: 22.02.2017
(51) Int. Cl.: G06F 3/0488

(54) **DEVICE CONTROL METHOD AND APPARATUS**

(30) Priority: 23.08.2016 CN 201610711292
(71) Applicant: Huawei Technologies Co., Ltd., Longgang District Shenzhen, Guangdong 518129 (CN)
(72) Inventor: YIN, Han, Shenzhen Guangdong 518129 (CN); DONG, Jianfei, Shenzhen Guangdong 518129 (CN)
(74) Representative: Maiwald Patent- und Rechtsanwaltsgesellschaft mbH
(86) International application number: PCT/CN2017/074393
(87) International publication number: WO 2018/036120

(57) **Abstract**

The present invention provides a device control method and apparatus, which are applied to a terminal. The control method includes: obtaining an operation rhythm characteristic presented when an operation gesture passes through at least one preset region on a touchscreen of the terminal; matching an operation rhythm characteristic of each preset region against a corresponding preset rhythm characteristic to obtain a matching result; and when matching results of all preset regions meet an execution condition, controlling the terminal to execute a preset action corresponding to the operation gesture. Generally, different users have more or less different operation rhythm characteristics when performing an operation gesture in each preset region. Therefore, even though the operation gesture is leaked out due to a cause such as hitting the library, peeping, or smearing, an attacker cannot perform a preset operation on the terminal by taking advantage of the operation gesture that was leaked out. That is, technical solutions of the present invention can reduce a risk of compromising privacy of a user stored in a terminal.

## Description

This application claims priority to Chinese Patent Application No. 201610711292.9, filed with the Chinese Patent Office on August 23, 2016 and entitled "DEVICE CONTROL METHOD AND APPARATUS", which is incorporated herein by reference in its entirety.

### TECHNICAL FIELD

The present invention relates to the data processing field, and in particular, to a device control method and apparatus.

### BACKGROUND

With development of economy, science, and technologies, terminals such as a mobile phone and an iPad become increasingly popular. These terminals can implement functions such as communication and storage. People can use these terminals to communicate with each other, and store information such as phone numbers and private files on these terminals.

Therefore, privacy of a user is likely to be compromised if these terminals are used by an unauthorized user. In view of this, currently, a user is allowed to preset some authentication means on most terminals. A user is allowed to perform an operation on a corresponding terminal only after the user enters a correct unlocking password to unlock the terminal.

Specifically, the user presets a pattern password or a symbol (a number, a letter, a punctuation mark, or the like) password as an unlocking password on the terminal. Once the unlocking password is leaked out, an authorized user can unlock the terminal by taking advantage of the unlocking password.

Currently, when an unlocking password is leaked out, how to reduce a risk of leaking out information in a terminal is an urgent problem to be resolved.

### SUMMARY

Embodiments of the present invention provide an unlocking method and apparatus, to reduce a risk of compromising privacy of a user stored in a terminal.

According to a first aspect, an embodiment of the present invention provides a device control method, applied to a terminal. The method includes: obtaining an operation rhythm characteristic presented when an operation gesture passes through at least one preset region on a touchscreen of the terminal; matching an operation rhythm characteristic of each preset region against a corresponding preset rhythm characteristic to obtain a matching result; and when matching results of all preset regions meet an execution condition, controlling the terminal to execute a preset action corresponding to the operation gesture.

In this embodiment of the present invention, the touchscreen of the terminal may be a suitable apparatus such as a capacitive touchscreen or a resistive touchscreen. The operation gesture may be a pattern password, a symbol (a number, a letter, a punctuation mark, or the like) password, or the like. The preset action corresponding to the operation gesture may be an unlocking operation, a screen locking operation, or the like. Before implementing this embodiment of the present invention, a user needs to perform a setting operation in advance. Specifically, the user needs to perform particular operations such as taping and sliding, to display multiple key regions having a definite boundary on the touchscreen of the terminal. Then, the user enters historical verification operation gestures on the touchscreen multiple times (such as two, three, or four times). The historical verification operation gestures entered multiple times pass through a same key region. The key region through which the multiple historical verification operation gestures pass is the preset region described in this embodiment of the present invention.

In a specific implementation process of the present invention, the operation rhythm characteristic of each preset region is corresponding to a preset rhythm characteristic, and the operation rhythm characteristic may include a time characteristic and/or a space characteristic. The operation rhythm characteristic is used to represent a biological habit of a user that performs the operation gesture. The preset rhythm characteristic may be obtained by means of calculation according to time characteristics and/or position characteristics of the multiple historical verification operation gestures. When the operation rhythm characteristic of each preset region is matched against the corresponding preset rhythm characteristic, matching manners may be different according to different operation rhythm characteristics and corresponding different preset rhythm characteristics. For each matching manner, a corresponding execution condition may be set. When the matching results of all the preset regions meet the execution condition, the terminal is controlled to execute the preset action corresponding to the operation gesture. Each preset rhythm characteristic is obtained by means of calculation according to the time characteristics and/or the position characteristics of the multiple historical verification operation gestures. Therefore, each preset rhythm characteristic can reflect a biological habit, in a corresponding preset region, of the user that performs the setting in advance. Therefore, in the technical solution of this embodiment of the present invention, when it is determined whether the matching results of all the preset regions meet the preset condition, the biological habit of the user is actually used to determine whether the user that performs the operation gesture and the user that performs the setting operation in advance are a same user. That is, in the technical solution of this embodiment of the present invention, the terminal executes the preset action corresponding to the operation gesture only when the user that performs the operation gesture and the user that performs the setting operation in advance are a same user. Therefore, the technical solution of this embodiment of the present invention can reduce a risk of compromising privacy of a user stored in a terminal.

In this embodiment of the present invention, the terminal first obtains the operation rhythm characteristic presented when the operation gesture passes through the at least one preset region on the touchscreen of the terminal, and matches the operation rhythm characteristic of each preset region against the corresponding preset rhythm characteristic to obtain the matching result; and when the matching results of all the preset regions meet the execution condition, the terminal is controlled to execute the preset action corresponding to the operation gesture. In the technical solution of the present invention, the operation rhythm characteristic of each preset region, on the touchscreen of the terminal, through which the operation gesture passes is matched against the corresponding preset rhythm characteristic to obtain the matching result. The preset action corresponding to the operation gesture is executed on the terminal only when the matching results of all the preset regions meet the execution condition. Generally, different users have more or less different operation rhythm characteristics when performing an operation gesture in each preset region. Therefore, even though the operation gesture is leaked out due to a cause such as hitting the library, peeping, or smearing, an attacker cannot perform a preset operation on the terminal by taking advantage of the operation gesture that was leaked out. That is, the technical solution of the present invention can reduce a risk of compromising privacy of a user stored in a terminal.

With reference to the first aspect, in a first possible implementation of the first aspect, the operation rhythm characteristic includes a space characteristic, and the obtaining an operation rhythm characteristic presented when an operation gesture passes through at least one preset region on a touchscreen of the terminal includes: obtaining position coordinates of multiple touch points of the operation gesture and boundary coordinates of each preset region; determining, by using an interpolation method, entering coordinates and/or leaving coordinates for each preset region through which the operation gesture passes; and determining the entering coordinates and/or the leaving coordinates for each preset region as the space characteristic of the corresponding preset region.

In this implementation, the corresponding operation gesture is a pattern password. In a specific implementation process of this implementation, position coordinates of a touch point of the operation gesture may be obtained at every particular length, or position coordinates of a touch point of the operation gesture may be obtained at every particular time length. Then, the entering coordinates and/or the leaving coordinates for each preset region through which the operation gesture passes are determined according to the obtained position coordinates of the multiple touch points and the boundary coordinates of each preset region by using the interpolation method, and the entering coordinates and/or the leaving coordinates for each preset region are determined as the space characteristic of the corresponding preset region. When different users perform a same operation gesture, entering coordinates and/or leaving coordinates for each preset region through which the operation gesture passes are more or less different. Therefore, the entering coordinates and/or the leaving coordinates for each preset region can reflect a biological habit of the user that performs the operation gesture. Herein, it should be noted that, in the specific implementation process of this implementation, it is required to obtain sufficient touch points of the operation gesture, so that the terminal can determine, according to the obtained position coordinates of the multiple touch points and the boundary coordinates of each preset region by using the interpolation method, the entering coordinates and/or the leaving coordinates for each preset region through which the operation gesture passes.

With reference to the first possible implementation of the first aspect, in a second implementation of the first aspect, the matching an operation rhythm characteristic of each preset region against a corresponding preset rhythm characteristic to obtain a matching result includes: calculating a first distance between the entering coordinates for each preset region and corresponding preset entering coordinates, and/or calculating a second distance between the leaving coordinates for each preset region and corresponding preset leaving coordinates; and using the first distance and/or the second distance, obtained by means of calculation, of each preset region as a matching result.

In this implementation, the preset entering coordinates and/or the preset leaving coordinates for each preset region are a preset rhythm characteristic of a same preset region. The preset entering coordinates for each preset region are average entering coordinates obtained by averaging entering coordinates of the multiple historical verification operation gestures in each preset region. The preset leaving coordinates for each preset region are average leaving coordinates obtained by averaging leaving coordinates of the multiple historical verification operation gestures in each preset region. In this implementation, the first distance between the entering coordinates for each preset region and the corresponding preset entering coordinates and/or the second distance between the leaving coordinates for each preset region and the corresponding preset leaving coordinates are/is calculated, so as to compare biological habits in each preset region between the user that performs the operation gesture and the user that performs the setting operation. This facilitates subsequent determining whether the matching results of all the preset regions meet the execution condition.

With reference to the second possible implementation of the first aspect, in a third possible implementation of the first aspect, there are at least two preset regions, and the method further includes: calculating an average value of all first distances to obtain a first average distance; determining whether the first average distance is less than a first average distance threshold, where the first average distance threshold is obtained by calculating an average value of all first distances corresponding to each historical verification operation gesture, and then by averaging the multiple average values obtained by means of calculation; and when the first average distance is less than the first average distance threshold, determining that the matching results of all the preset regions meet the execution condition.

In this implementation, the first average distance threshold is obtained by calculating a first average distance corresponding to each historical verification operation gesture, and then by averaging the obtained multiple first average distances. The first average distance threshold is obtained by averaging the multiple first average distances corresponding to the multiple historical verification operation gestures. Therefore, the first average distance threshold can represent a deviation range obtained when the user that performs the setting operation performs the operation gesture. Therefore, when the first average distance is less than the first average distance threshold, it indicates that the operation gesture is within a deviation range allowed by the multiple historical verification operation gestures. That is, it is determined that the user that performs the operation gesture and the user that performs the setting operation are a same user. Therefore, this implementation can reduce a risk of compromising privacy of a user stored in a terminal.

With reference to the second possible implementation of the first aspect, in a fourth possible implementation of the first aspect, there are at least two preset regions, and the method further includes: calculating an average value of all second distances to obtain a second average distance; determining whether the second average distance is less than a second average distance threshold, where the second average distance threshold is obtained by calculating an average value of all second distances corresponding to each historical verification operation gesture, and then by averaging the multiple average values obtained by means of calculation; and when the second average distance is less than the second average distance threshold, determining that the matching results of all the preset regions meet the execution condition.

In this implementation, the second average distance threshold is obtained by calculating a second average distance corresponding to each historical verification operation gesture, and then by averaging the obtained multiple second average distances. The second average distance threshold is obtained by averaging the multiple second average distances corresponding to the multiple historical verification operation gestures. Therefore, the second average distance threshold can represent a deviation range obtained when the user that performs the setting operation performs the operation gesture. Therefore, when the second average distance is less than the second average distance threshold, it indicates that the operation gesture is within a deviation range allowed by the multiple historical verification operation gestures. That is, it is determined that the user that performs the operation gesture and the user that performs the setting operation are a same user. Therefore, this implementation can reduce a risk of compromising privacy of a user stored in a terminal.

With reference to the second possible implementation of the first aspect, in a fifth possible implementation of the first aspect, there are at least two preset regions, and the method further includes: calculating an average value of all first distances to obtain a first average distance, and calculating an average value of all second distances to obtain a second average distance; determining whether the first average distance is less than a first average distance threshold, and determining whether the second average distance is less than a second average distance threshold; and when the first average distance is less than the first average distance threshold, and the second average distance is less than the second average distance threshold, determining that the matching results of all the preset regions meet the execution condition.

In this implementation, both the first average distance and the second average distance of all the preset regions are used for determining. It is determined, only when the first average distance is less than the first average distance threshold and the second average distance is less than the second average distance threshold, that the matching results of all the preset regions meet the execution condition. That is, it is determined that the user that performs the operation gesture and the user that performs the setting operation are a same user. Therefore, this implementation can further reduce a risk of compromising privacy of a user stored in a terminal.

With reference to the first aspect, in a sixth possible implementation of the first aspect, the operation rhythm characteristic includes a time characteristic, and the obtaining an operation rhythm characteristic presented when an operation gesture passes through at least one preset region on a touchscreen of the terminal includes: obtaining position coordinates of multiple touch points of the operation gesture and boundary coordinates of each preset region; determining, by using an interpolation method, entering coordinates and/or leaving coordinates for each preset region through which the operation gesture passes; obtaining an entering moment corresponding to the entering coordinates and/or a leaving moment corresponding to the leaving coordinates for each preset region; and determining the entering moment and/or the leaving moment of each preset region as the time characteristic of the corresponding preset region.

In this implementation, the corresponding operation gesture is still a pattern password. In this implementation, on a basis of determining the entering coordinates and/or the leaving coordinates for each preset region, the entering moment corresponding to the entering coordinates and/or the leaving moment corresponding to the leaving coordinates for each preset region are/is determined as the time characteristic of the corresponding preset region. After obtaining the entering moment and/or the leaving moment of each preset region, a speed at which the operation gesture passes through each preset region may be calculated according to the entering moment and/or the leaving moment of each preset region. However, different users may be more or less different in speed when performing a same operation gesture to pass through each preset region. Therefore, the entering moment and/or the leaving moment of each preset region can reflect a biological habit of the user that performs the operation gesture.

With reference to the sixth possible implementation of the first aspect, in a seventh possible implementation of the first aspect, the matching an operation rhythm characteristic of each preset region against a corresponding preset rhythm characteristic to obtain a matching result includes: calculating a first time interval between the leaving moment and the entering moment of each preset region, and/or calculating a second time interval for the operation gesture sliding from each preset region to an adjacent preset region in a sliding direction of the operation gesture; calculating a first time difference between the first time interval of each preset region and a corresponding first time threshold, and/or calculating a second time difference between the second time interval of each preset region and a corresponding second time threshold; and using the first time difference and/or the second time difference, obtained by means of calculation, of each preset region as a matching result.

In this implementation, the first time threshold and/or the second time threshold of each preset region are/is a preset rhythm characteristic of a same preset region. The first time threshold of each preset region is an average first time interval obtained by averaging first time intervals of multiple historical verification operation gestures in each preset region. The second time threshold of each preset region is an average second time interval obtained by averaging second time intervals of multiple historical verification operation gestures in each preset region. The first time interval of each preset region is equal to a difference between the leaving moment and the entering moment of the preset region. The second time interval of each preset region is equal to a difference between the leaving moment of the preset region and an entering moment of the adjacent preset region. In this implementation, the first time difference between the first time interval of each preset region and the corresponding first time threshold is calculated, and/or the second time difference between the second time interval of each preset region and the corresponding second time threshold is calculated, so as to compare biological habits in each preset region between the user that performs the preset operation gesture and the user that performs the setting operation. This facilitates subsequent determining whether the matching results of all the preset regions meet the execution condition.

With reference to the seventh possible implementation of the first aspect, in an eighth possible implementation of the first aspect, there are at least two preset regions, and the method further includes: calculating an average value of all first time differences to obtain a first average time difference; determining whether the first average time difference is less than a first average time difference threshold, where the first average time difference threshold is obtained by calculating an average value of all first time differences corresponding to each historical verification operation gesture, and then by averaging the multiple average values obtained by means of calculation; and when the first average time difference is less than the first average time difference threshold, determining that the matching results of all the preset regions meet the execution condition.

In this implementation, the first average time difference threshold is obtained by calculating a first average time difference corresponding to each historical verification operation gesture, and then by averaging the obtained multiple first average time differences. The first average time difference threshold is obtained by averaging the multiple first average time differences corresponding to the multiple historical verification operation gestures. Therefore, the first average time difference threshold can represent a deviation range obtained when the user that performs the setting operation performs the operation gesture. Therefore, when the first average distance is less than the first average distance threshold, it indicates that the operation gesture is within a deviation range allowed by the multiple historical verification operation gestures. That is, it is determined that the user that performs the operation gesture and the user that performs the setting operation are a same user. Therefore, this implementation can reduce a risk of compromising privacy of a user stored in a terminal.

With reference to the seventh possible implementation of the first aspect, in a ninth possible implementation of the first aspect, there are at least two preset regions, and the method further includes: calculating an average value of all second time differences to obtain a second average time difference; determining whether the second average time difference is less than a second average time difference threshold, where the second average time difference threshold is obtained by calculating an average value of all second time differences corresponding to each historical verification operation gesture, and then by averaging the multiple average values obtained by means of calculation; and when the second average time difference is less than the second average time difference threshold, determining that the matching results of all the preset regions meet the execution condition.

In this implementation, the second average time difference threshold is obtained by calculating a second average time difference corresponding to each historical verification operation gesture, and then by averaging the obtained multiple second average time differences. The second average time difference threshold is obtained by averaging the multiple second average time differences corresponding to the multiple historical verification operation gestures. Therefore, the second average time difference threshold can represent a deviation range obtained when the user that performs the setting operation performs the operation gesture. Therefore, when the second average distance is less than the second average distance threshold, it indicates that the operation gesture is within a deviation range allowed by the multiple historical verification operation gestures. That is, it is determined that the user that performs the operation gesture and the user that performs the setting operation are a same user. Therefore, this implementation can reduce a risk of compromising privacy of a user stored in a terminal.

With reference to the seventh possible implementation of the first aspect, in a tenth possible implementation of the first aspect, there are at least two preset regions, and the method further includes: calculating an average value of all first time differences to obtain a first average time difference, and calculating an average value of all second time differences to obtain a second average time difference; determining whether the first average time difference is less than a first average time difference threshold, and determining whether the second average time difference is less than a second average time difference threshold; and when the first average time difference is less than the first average time difference threshold, and the second average time difference is less than the second average time difference threshold, determining that the matching results of all the preset regions meet the execution condition.

In this implementation, both the first average time difference and the second average time difference of all the preset regions are used for determining. It is determined, only when the first average time difference is less than the first average time difference threshold and the second average time difference is less than the second average time difference threshold, that the matching results of all the preset regions meet the execution condition. That is, it is determined that the user that performs the operation gesture and the user that performs the setting operation are a same user. Therefore, this implementation can further reduce a risk of compromising privacy of a user stored in a terminal.

With reference to the sixth possible implementation of the first aspect, in an eleventh possible implementation of the first aspect, the matching an operation rhythm characteristic of each preset region against a corresponding preset rhythm characteristic to obtain a matching result includes: calculating a first time interval between the leaving moment and the entering moment of each preset region, calculating a sum of all first time intervals to obtain a first total time interval, calculating a first ratio of the first time interval of each preset region to the first total time interval, and calculating a first ratio difference between the first ratio of each preset region and a corresponding first ratio threshold, where the first ratio threshold corresponding to each preset region is an average value, obtained by means of calculation, of all first ratios for multiple historical verification operation gestures in a same preset region; and/or calculating a second time interval for the operation gesture sliding from each preset region to an adjacent preset region in a sliding direction of the operation gesture, calculating a sum of all second time intervals to obtain a second total time interval, calculating a second ratio of the second time interval of each preset region to the second total time interval, and calculating a second ratio difference between the second ratio of each preset region and a corresponding second ratio threshold, where the second ratio threshold corresponding to each preset region is an average value, obtained by means of calculation, of all second ratios for multiple historical verification operation gestures in a same preset region; and using the first ratio difference and/or the second ratio difference, obtained by means of calculation, of each preset region as a matching result.

In this implementation, the first ratio threshold and/or the second ratio threshold of each preset region are/is a preset rhythm characteristic of a same preset region. The first ratio threshold of each preset region is an average first ratio obtained by averaging first ratios for the multiple historical verification operation gestures in each preset region. The second ratio threshold of each preset region is an average second ratio obtained by averaging second ratios for the multiple historical verification operation gestures in each preset region. The first time interval of each preset region is equal to a difference between the leaving moment and the entering moment of the preset region. The second time interval of each preset region is equal to a difference between the leaving moment of the preset region and an entering moment of the adjacent preset region. In this implementation, the first ratio difference between the first ratio of each preset region and the corresponding first ratio threshold is calculated, and/or the second ratio difference between the second ratio of each preset region and the corresponding second ratio threshold is calculated, so as to compare biological habits in each preset region between the user that performs the preset operation gesture and the user that performs the setting operation. This facilitates subsequent determining whether the matching results of all the preset regions meet the execution condition.

With reference to the eleventh possible implementation of the first aspect, in a twelfth possible implementation of the first aspect, there are at least two preset regions, and the method further includes: calculating an average value of all first ratio differences to obtain a first average ratio difference; determining whether the first average ratio difference is less than a first average ratio difference threshold, where the first average ratio difference threshold is obtained by calculating an average value of all first ratio differences corresponding to each historical verification operation gesture, and then by averaging the multiple average values obtained by means of calculation; and when the first average ratio difference is less than the first average ratio difference threshold, determining that the matching results of all the preset regions meet the execution condition.

In this implementation, the first average ratio difference threshold is obtained by calculating a first average ratio difference corresponding to each historical verification operation gesture, and then by averaging the obtained multiple first average ratio differences. The first average ratio difference threshold is obtained by averaging the multiple first average ratio differences corresponding to the multiple historical verification operation gestures. Therefore, the first average ratio difference threshold can represent a deviation range obtained when the user that performs the setting operation performs the operation gesture. Therefore, when the first average ratio difference is less than the first average ratio difference threshold, it indicates that the operation gesture is within a deviation range allowed by the multiple historical verification operation gestures. That is, it is determined that the user that performs the operation gesture and the user that performs the setting operation are a same user. Therefore, this implementation can reduce a risk of compromising privacy of a user stored in a terminal.

With reference to the eleventh possible implementation of the first aspect, in a thirteenth possible implementation of the first aspect, there are at least two preset regions, and the method further includes: sequencing all first ratio differences, and calculating a first limiting rhythm deviation of the operation gesture according to a sequencing result; determining whether a difference between the first limiting rhythm deviation and a first preset limiting rhythm deviation is less than a first deviation threshold, where the first deviation threshold is a maximum difference among absolute differences between first limiting rhythm deviations corresponding to the multiple historical verification operation gestures and the first preset limiting rhythm deviation; and when the difference between the first limiting rhythm deviation and the first preset limiting rhythm deviation is less than the first deviation threshold, determining that the matching results of all the preset regions meet the execution condition.

In this implementation, after all the first ratio differences are sequenced, a first-sequenced first ratio difference and a last-sequenced first ratio difference are classified into one group, a second-sequenced first ratio difference and a last-but-one-sequenced first ratio difference are classified into one group, and by analogy, all the first ratio differences are classified. Then, a square of a difference between two first ratio differences in each group is calculated. Finally, a sum of squares of differences in all groups is calculated to obtain the first limiting rhythm deviation of the operation gesture. For example, the operation gesture passes through a total of six preset regions. First ratio differences of the six preset regions are sd1, sd2, sd3, sd4, sd5, and sd6 respectively, and a sequence is sd1 < sd2 < sd3 < sd4 < sd5 < sd6 in ascending order. The first limiting rhythm deviation of the operation gesture is equal to (sd6-sd1)² + (sd5-sd2)² + (sd4-sd3)². In addition, when a quantity of first ratio differences is an odd number, a remaining first ratio difference may be discarded, or a method for directly calculating a difference between the remaining first ratio difference and zero is used or the like. The first preset limiting rhythm deviation is equal to an average value of first limiting rhythm deviations corresponding to the multiple historical verification operation gestures. In this implementation, the first deviation threshold is the maximum difference among the absolute differences between the first limiting rhythm deviations corresponding to the multiple historical verification operation gestures and the first preset limiting rhythm deviation. Therefore, the first deviation threshold can represent an allowed range that deviates from the first preset limiting rhythm deviation when the user that performs the setting operation performs the operation gesture. Therefore, when the difference between the first limiting rhythm deviation and the first preset limiting rhythm deviation is less than the first deviation threshold, it indicates that a range that the first limiting rhythm deviation corresponding to the operation gesture deviates from the first preset limiting rhythm deviation is consistent with the user that performs the setting operation. That is, it is determined that the user that performs the operation gesture and the user that performs the setting operation are a same user. Therefore, this implementation can reduce a risk of compromising privacy of a user stored in a terminal.

In this implementation, the difference between the first limiting rhythm deviation and the first preset limiting rhythm deviation is compared with the first difference threshold to determine whether the user that performs the operation gesture and the user that performs the setting operation are a same user. That is, in this implementation, when the user performs the operation gesture, a difference between a statistic result of multiple operations (multiple historical verification operation gestures) of the user and each operation result of the user is considered. Therefore, a result of the determining by using this implementation is more accurate. This can further reduce a risk of compromising privacy of a user stored in a terminal.

With reference to the eleventh possible implementation of the first aspect, in a fourteenth possible implementation of the first aspect, there are at least two preset regions, and the method further includes: calculating an average value of all second ratio differences to obtain a second average ratio difference; determining whether the second average ratio difference is less than a second average ratio difference threshold, where the second average ratio difference threshold is obtained by calculating an average value of all second ratio differences corresponding to each historical verification operation gesture, and then by averaging the multiple average values obtained by means of calculation; and when the second average ratio difference is less than the second average ratio difference threshold, determining that the matching results of all the preset regions meet the execution condition.

In this implementation, the second average ratio difference threshold is obtained by calculating a second average ratio difference corresponding to each historical verification operation gesture, and then by averaging the obtained multiple second average ratio differences. The second average ratio difference threshold is obtained by averaging the multiple second average ratio differences corresponding to the multiple historical verification operation gestures. Therefore, the second average ratio difference threshold can represent a deviation range obtained when the user that performs the setting operation performs the operation gesture. Therefore, when the second average ratio difference is less than the second average ratio difference threshold, it indicates that the operation gesture is within a deviation range allowed by the multiple historical verification operation gestures. That is, it is determined that the user that performs the operation gesture and the user that performs the setting operation are a same user. Therefore, this implementation can reduce a risk of compromising privacy of a user stored in a terminal.

With reference to the eleventh possible implementation of the first aspect, in a fifteenth possible implementation of the first aspect, there are at least two preset regions, and the method further includes: sequencing all second ratio differences, and calculating a second limiting rhythm deviation of the operation gesture according to a sequencing result; determining whether a difference between the second limiting rhythm deviation and a second preset limiting rhythm deviation is less than a second deviation threshold, where the first deviation threshold is a maximum difference among absolute differences between first limiting rhythm deviations corresponding to the multiple historical verification operation gestures and the first preset limiting rhythm deviation; and when the difference between the second limiting rhythm deviation and the second preset limiting rhythm deviation is less than the second deviation threshold, determining that the matching results of all the preset regions meet the execution condition.

In this implementation, after all the second ratio differences are sequenced, a first-sequenced second ratio difference and a last-sequenced second ratio difference are classified into one group, a second-sequenced second ratio difference and a last-but-one-sequenced second ratio difference are classified into one group, and by analogy, all the second ratio differences are classified. Then, a square of a difference between two second ratio differences in each group is calculated. Finally, a sum of squares of differences in all groups is calculated to obtain the second limiting rhythm deviation of the operation gesture. For example, the operation gesture passes through a total of six preset regions. Second ratio differences of the six preset regions are sd1, sd2, sd3, sd4, sd5, and sd6 respectively, and a sequence is sd1 < sd2 < sd3 < sd4 < sd5 < sd6 in ascending order. The second limiting rhythm deviation of the operation gesture is equal to (sd6-sd1)² + (sd5-sd2)² + (sd4-sd3)². In addition, when a quantity of second ratio differences is an odd number, a remaining second ratio difference may be discarded, or a method for directly calculating a difference between the remaining second ratio difference and zero is used or the like. The second preset limiting rhythm deviation is equal to an average value of second limiting rhythm deviations corresponding to the multiple historical verification operation gestures. In this implementation, the second deviation threshold is the maximum difference among the absolute differences between the second limiting rhythm deviations corresponding to the multiple historical verification operation gestures and the second preset limiting rhythm deviation. Therefore, the second deviation threshold can represent an allowed range that deviates from the second preset limiting deviation when the user that performs the setting operation performs the operation gesture. Therefore, when the difference between the second limiting rhythm deviation and the second preset limiting rhythm deviation is less than the second deviation threshold, it indicates that a range that the second limiting rhythm deviation corresponding to the operation gesture deviates from the second preset limiting rhythm deviation is consistent with the user that performs the setting operation. That is, it is determined that the user that performs the operation gesture and the user that performs the setting operation are a same user. Therefore, this implementation can reduce a risk of compromising privacy of a user stored in a terminal.

In this implementation, the difference between the second limiting rhythm deviation and the second preset limiting rhythm deviation is compared with the second difference threshold to determine whether the user that performs the operation gesture and the user that performs the setting operation are a same user. That is, in this implementation, when the user performs the operation gesture, a difference between a statistic result of multiple operations (multiple historical verification operation gestures) of the user and each operation result of the user is considered. Therefore, a result of the determining by using this implementation is more accurate. This can further reduce a risk of compromising privacy of a user stored in a terminal.

With reference to the eleventh possible implementation of the first aspect, in a sixteenth possible implementation of the first aspect, there are at least two preset regions, and the method further includes: calculating an average value of all first ratio differences to obtain a first average ratio difference, and calculating an average value of all second ratio differences to obtain a second average ratio difference; determining whether the first average ratio difference is less than a first average ratio difference threshold, and determining whether the second average ratio difference is less than a second average ratio difference threshold; and when the first average ratio difference is less than the first average ratio difference threshold, and the second average ratio difference is less than the second average ratio difference threshold, determining that the matching results of all the preset regions meet the execution condition.

In this implementation, both the first average ratio difference and the second average ratio difference of all the preset regions are used for determining. It is determined, only when the first average ratio difference is less than the first average ratio difference threshold and the second average ratio difference is less than the second average ratio difference threshold, that the matching results of all the preset regions meet the execution condition. That is, it is determined that the user that performs the operation gesture and the user that performs the setting operation are a same user. Therefore, this implementation can further reduce a risk of compromising privacy of a user stored in a terminal.

With reference to the eleventh implementation of the first aspect, in a seventeenth possible implementation of the first aspect, there are at least two preset regions, and the method further includes: sequencing all first ratio differences, and calculating a first limiting rhythm deviation of the operation gesture according to a sequencing result; sequencing all second ratio differences, and calculating a second limiting rhythm deviation of the operation gesture according to a sequencing result; determining whether a difference between the first limiting rhythm deviation and a first preset limiting rhythm deviation is less than a first deviation threshold, and determining whether a difference between the second limiting rhythm deviation and a second preset limiting rhythm deviation is less than a second deviation threshold; and when the difference between the first limiting rhythm deviation and the first preset limiting rhythm deviation is less than the first deviation threshold, and the difference between the second limiting rhythm deviation and the second preset limiting rhythm deviation is less than the second deviation threshold, determining that the matching results of all the preset regions meet the execution condition.

In this implementation, both the first limiting rhythm deviation and the second limiting rhythm deviation of the operation gesture are used for determining. It is determined, only when the difference between the first limiting rhythm deviation and the first preset limiting rhythm deviation is less than the first deviation threshold, and the difference between the second limiting rhythm deviation and the second preset limiting rhythm deviation is less than the second deviation threshold, that the matching results of all the preset regions meet the execution condition. That is, the user that performs the operation gesture and the user that performs the setting operation are a same user. Therefore, this implementation can further reduce a risk of compromising privacy of a user stored in a terminal.

It should be additionally noted that, the foregoing implementations are merely some but not all implementations of the embodiments of the present invention. An example is used for description in the following.

For example, when the operation gesture is a symbol password, a moment for taping each preset region is defined as an entering moment of the preset region, and a moment for leaving each preset region is defined as a leaving moment of the preset region. On this basis, the device control method that is implemented by using a time characteristic is implemented in this embodiment of the present invention.

For another example, in a specific implementation process of this embodiment of the present invention, definitions of all the thresholds in the foregoing implementations may be replaced to constitute a new implementation. For example, the first average distance threshold in the third possible implementation of the first aspect may be defined as a maximum first average distance among multiple first average distances corresponding to the multiple historical verification operation gestures, and the first average time difference threshold in the seventh possible implementation of the first aspect may be defined as a minimum first average time difference among multiple first average time differences corresponding to the multiple historical verification operation gestures, and the like.

For another example, in the specific implementation process of this embodiment of the present invention, there may be another implementation of determining whether the matching results of all the preset regions meet the execution condition. For example, for each preset region, it may be determined whether a first distance of the preset region is less than a first distance threshold, or it may be determined whether a first time difference of the preset region is less than a first time difference threshold. Then, a quantity of preset regions whose first distances are less than the first distance threshold is counted, or a quantity of preset regions whose first time differences are less than the first time difference threshold is counted. When a counted quantity is larger than a quantity threshold, it is determined that the matching results of all the preset regions meet the execution condition. The first distance threshold is equal to an average value of first distances of the multiple historical verification operation gestures in a same preset region, and the second distance threshold is equal to an average value of second distances of the multiple historical verification operation gestures in a same preset region. The quantity threshold may be set according to a quantity of preset regions and a privacy protection requirement. A larger quantity of preset regions indicates a higher privacy protection requirement and a larger quantity threshold. For example, when there are three preset regions, a first preset quantity threshold may be set to 2. When there are six preset regions, a first preset quantity threshold may be set to 4. When there are six preset regions and a privacy protection requirement is relatively high, a first preset quantity threshold may be set to 5.

For another example, to better reduce a risk of compromising privacy of a user stored in a terminal, in a specific implementation process in this embodiment of the present invention, it may be determined, according to both the time characteristic and the space characteristic, whether the matching results of all the preset regions meet the execution condition. It is determined, only when both the time characteristic and the space characteristic indicate that the user that performs the operation gesture and the user that performs the setting operation are a same user, that the matching results of all the preset regions meet the execution condition. In addition, when it is determined, according to both the time characteristic and the space characteristic, whether the matching results of all the preset regions meet the execution condition, deviation ranges of the time characteristic and the space characteristic may be integrated, and it is determined, according to an integration result, whether the matching results of all the preset regions meet the execution condition. For example, a ratio of the first average distance to the first average distance threshold may be calculated to obtain a value, and a ratio of the first average time difference to the first time difference threshold is calculated to obtain another value. When a sum of the two values is less than an average value of multiple sums corresponding to the multiple historical verification operation gestures, it is determined that the matching results of all the preset regions meet the execution condition. In this case, generally, when the user performs the operation gesture, a higher speed for the operation gesture indicates a larger deviation of the time characteristic. Therefore, in this case, an adjustment coefficient (for example, a base value of the adjustment coefficient is set to 1, and when an operation speed of the operation gesture each time is 10% greater or less than an average operation speed of the multiple historical verification operation gestures, 0.05 is added to or subtracted from the adjustment coefficient) that is positively correlated to an operation speed is configured for a value corresponding to the time characteristic (that is, a ratio of the first average time difference to the first average time difference threshold). A product of the adjustment coefficient and the value corresponding to the time characteristic is a final value corresponding to the time characteristic.

According to a second aspect, an embodiment of the present invention provides a device control apparatus. The apparatus includes modules that are configured to perform method steps in the first aspect and the implementations of the first aspect.

According to a third aspect, an embodiment of the present invention provides a terminal, including a touchscreen and a processor. The processor is configured to obtain, by using the touchscreen, an operation rhythm characteristic presented when an operation gesture passes through at least one preset region on the touchscreen of the terminal. The processor is further configured to: match an operation rhythm characteristic of each preset region against a corresponding preset rhythm characteristic to obtain a matching result; and when matching results of all preset regions meet an execution condition, control the terminal to execute a preset action corresponding to the operation gesture.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a schematic diagram of a password setting scenario of a mobile phone according to an embodiment of the present invention;
FIG. 2 is a schematic diagram of a scenario of unlocking a mobile phone according to an embodiment of the present invention;
FIG. 3 is a flowchart of a device control method according to an embodiment of the present invention;
FIG. 4 is a flowchart of another device control method according to an embodiment of the present invention;
FIG. 5 is a flowchart of still another device control method according to an embodiment of the present invention;
FIG. 6 is a flowchart of still another device control method according to an embodiment of the present invention;
FIG. 7 is a flowchart of still another device control method according to an embodiment of the present invention;
FIG. 8 is a schematic structural diagram of a device control apparatus according to an embodiment of the present invention; and
FIG. 9 is a structural block diagram of a mobile phone according to an embodiment of the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

For ease of understanding, the technical concept of the technical solutions of the present invention is briefly described with reference to a pattern password unlocking manner of a mobile phone.

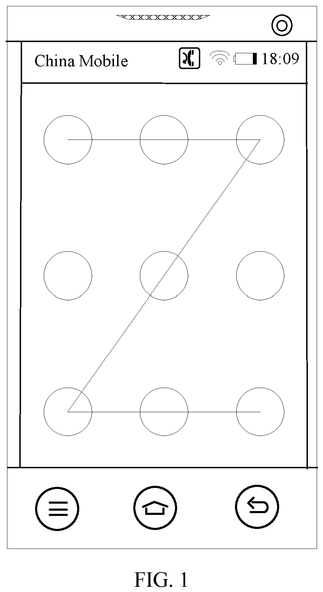

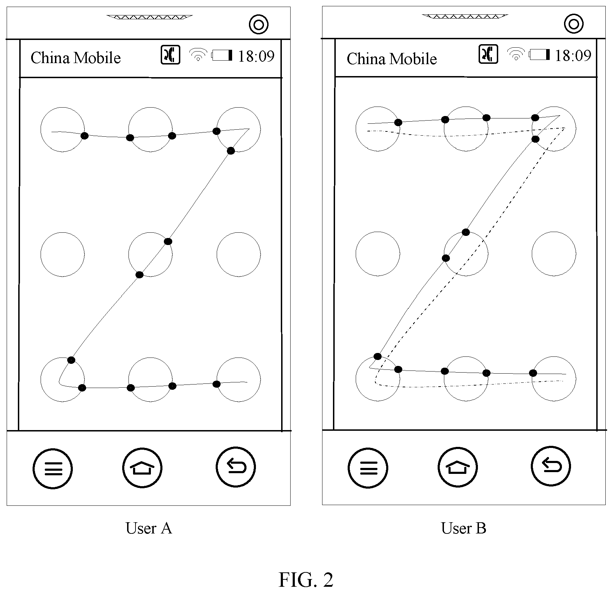

Referring to a specific instance shown in FIG. 1, to prevent a mobile phone shown in the diagram from being used by an unauthorized user, a user presets a password of a "Z" shaped pattern on a nine-grid pattern on a display screen of the mobile phone according to a prompt on the mobile phone. When the user needs to unlock the mobile phone, the user reenters the "Z" shaped pattern on the nine-grid pattern on the display screen of the mobile phone to unlock the mobile phone. As described in the background, in a general case, this unlocking manner can prevent privacy of a user from being compromised. However, in actual use, an attacker may learn a "Z" shaped unlock pattern by means of peeping, learn a "Z" shaped unlock pattern according to smearing traces left on the mobile phone when a user enters a pattern password, or learn a "Z" shaped unlock pattern by means of hitting the library (that is, the attacker learns the "Z" shaped unlock pattern that is used by a user in another scenario). In this case, the attacker can unlock the terminal of the user according to the "Z" shaped unlock pattern learned by the attacker, and then view privacy of the user. Consequently, the privacy of the user is compromised. This concern is researched in the present invention, and the inventor finds in the research that different users show different patterns when entering a same pattern password in positions of preset regions (for example, circular regions that the "Z" shaped pattern in FIG. 1 passes through) that the pattern password passes through, and that different users also show different patterns in time rhythm when entering the same pattern password in the preset regions. For example, referring to passwords of "Z" shaped patterns entered by a user A and a user B in FIG. 2, it can be found that, compared with a password of a "Z" shaped pattern entered by the user A, a password of a "Z" shaped pattern entered by the user B tends to be at an upper position of each preset region. In the present invention, a symbol (a number, a letter, a punctuation mark, or the like) password unlocking manner is further researched. Similarly, it is found that different users show different patterns when entering a same symbol password in positions of preset regions that the symbol password passes through, and that different users also show different patterns in time rhythm when entering the same symbol password in the preset regions. Based on the foregoing findings, the present invention provides a device control method. According to the device control method, the patterns learned above are used to determine whether a user that performs an operation gesture such as unlocking or screen locking and a user that performs a setting operation are a same user. A preset action (such as unlocking, screen locking, or the like) corresponding to the operation gesture is executed only when the user that performs the operation gesture such as unlocking or screen locking and the user that performs the setting operation are a same user. The technical solutions of the present invention are described in detail with reference to specific embodiments in the following.

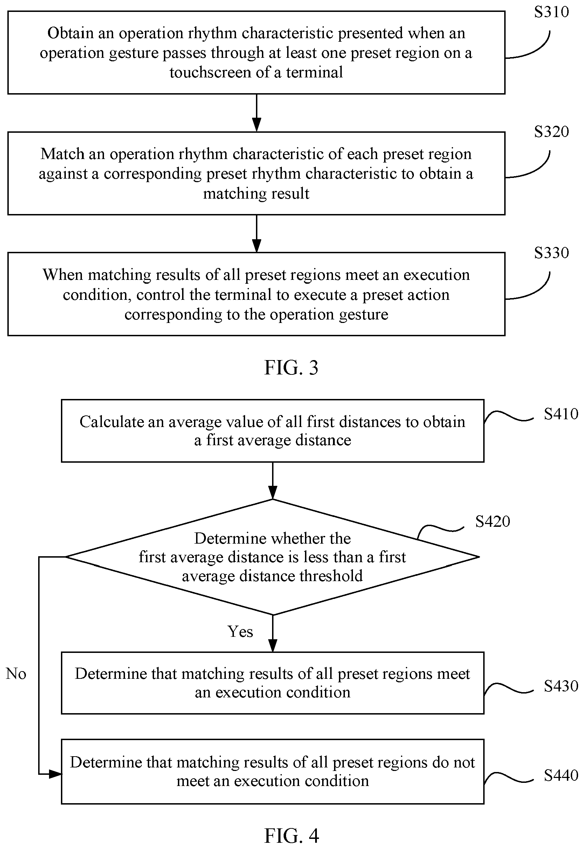

Referring to FIG. 3, FIG. 3 is a flowchart of a device control method according to an embodiment of the present invention. This embodiment of the present invention is specifically applied to a terminal, such as a mobile phone or an iPad, on which a pattern password or a symbol password can be set. Specifically, this embodiment may include the following steps.

In step S310, an operation rhythm characteristic presented when an operation gesture passes through at least one preset region on a touchscreen of the terminal is obtained.

The touchscreen of the terminal may be a suitable apparatus such as a capacitive touchscreen or a resistive touchscreen. The operation gesture may be a pattern password, a symbol (a number, a letter, a punctuation mark, or the like) password, or the like. Before implementing this embodiment of the present invention, a user needs to perform a setting operation in advance. Specifically, the user needs to perform particular operations such as taping and sliding, to display multiple key regions having a definite boundary on the touchscreen of the terminal. Then, the user enters historical verification operation gestures on the touchscreen multiple times (such as two, three, or four times). The historical verification operation gestures entered multiple times pass through a same key region. The key region through which the multiple historical verification operation gestures pass is the preset region described in this embodiment of the present invention. There is at least one preset region. For example, when the multiple historical verification operation gestures and the operation gesture are a "Z" shaped pattern in FIG. 1 and FIG. 2, seven circular key regions that the "Z" shaped pattern passes through are preset regions. It should be noted that, each preset region in FIG. 1 and FIG. 2 is in a circular shape. In a specific implementation process of this embodiment of the present invention, each preset region may be in another shape such as a square, a triangle, or a pentacle. This is not limited in the present invention.

After the user performs the setting operation on the terminal, when the touchscreen of the terminal detects an operation gesture that passes through the preset regions that the multiple historical verification operation gestures pass through, an operation rhythm characteristic of each preset region is obtained. The operation rhythm characteristic of each preset region may include a time characteristic and/or a space characteristic. The time characteristic of each preset region may include an entering moment at which the operation gesture enters the preset region and/or a leaving moment at which the operation gesture leaves the preset region. A position characteristic of each preset region may include an entering position at which the operation gesture enters the preset region and/or a leaving position at which the operation gesture leaves the preset region. Referring to a "Z" shaped operation gesture entered by a user A or a user B in FIG. 2, when performing a same operation gesture, both the user A and the user B have more or less different entering positions and different leaving positions in each preset region. Therefore, the entering position and/or the leaving position of each preset region can represent a biological habit of a user that performs the operation gesture. In addition, a speed rhythm presented when the operation gesture is performed in the preset region can be learned according to the entering moment and/or the leaving moment of each preset region. Users have different speed rhythms. Therefore, the entering moment and/or the leaving moment of each preset region can also represent the biological habit of the user that performs the operation gesture.

Herein, the entering moment, the leaving moment, the entering position, and the leaving position may be defined according to an actual case. For example, in FIG. 2, when the user A or the user B enters the "Z" shaped operation gesture, a first intersection point of the operation gesture and each preset region is used as an entering position of the preset region, a second intersection point of the operation gesture and each preset region is used as a leaving position of the preset region, a moment corresponding to the entering position is used as an entering moment, and a moment corresponding to the leaving position is used as a leaving moment. In the specific implementation process of this embodiment of the present invention, in step S310, the operation rhythm characteristic of each preset region may be obtained in multiple manners. In the following, examples are used to describe manners of obtaining the time characteristic and the space characteristic.

For example, in a specific implementation of the present invention, the operation rhythm characteristic includes a space characteristic. Correspondingly, step S310 may include:
obtaining position coordinates of multiple touch points of the operation gesture and boundary coordinates of each preset region;
determining, by using an interpolation method, entering coordinates and/or leaving coordinates for each preset region through which the operation gesture passes; and
determining the entering coordinates and/or the leaving coordinates for each preset region as the space characteristic of the corresponding preset region.

In this implementation, the corresponding operation gesture is a pattern password. In a specific implementation process of this implementation, position coordinates of a touch point of the operation gesture may be obtained at every particular length or at every particular time length. For example, a touch point may be recorded at every 1 mm or 2 mm according to an actual case, and position coordinates of the touch point are obtained. Alternatively, a touch point is recorded at every 0.03s or 0.06s, and position coordinates of the touch point are obtained. The particular length or the particular time length may be determined according to a size of a preset region and a spacing between preset regions. A rule for the determining is that the terminal can determine, according to the obtained position coordinates of the multiple touch points and the boundary coordinates of each preset region by using the interpolation method, the entering coordinates and/or the leaving coordinates for each preset region through which the operation gesture passes.

In the process of determining the entering coordinates and/or the leaving coordinates for each preset region in this implementation, a line segment may be used to connect adjacent touch points in the multiple touch points. A line segment that intersects with a boundary of each preset region is searched for, and position coordinates of a corresponding touch point are extracted. Then, the entering coordinates and/or the leaving coordinates for each preset region are calculated according to the extracted position coordinates of the touch point and the boundary coordinates of the preset region by using the interpolation method. In the following, a second preset region on the operation gesture is described. Line segments are used to connect adjacent touch points. It is found that both a fifth line segment and a seventh line segment are intersected with the second preset region. Position coordinates of touch points at two ends of both the fifth line segment and the seventh line segment are extracted. Then, entering coordinates for the second preset region are calculated according to boundary coordinates of the second preset region and the position coordinates of the touch points at the two ends of the fifth line segment by using the interpolation method. Leaving coordinates for the second preset region are calculated according to the boundary coordinates of the second preset region and the position coordinates of the touch points at the two ends of the seventh line segment by using the interpolation method.

For another example, in a specific implementation of the present invention, the operation rhythm characteristic includes a time characteristic. Correspondingly, step S310 may include:
obtaining position coordinates of multiple touch points of the operation gesture and boundary coordinates of each preset region;
determining, by using an interpolation method, entering coordinates and/or leaving coordinates for each preset region through which the operation gesture passes;
obtaining an entering moment corresponding to the entering coordinates and/or a leaving moment corresponding to the leaving coordinates for each preset region; and
determining the entering moment and/or the leaving moment of each preset region as the time characteristic of the corresponding preset region.

In this implementation, the corresponding operation gesture is also a pattern password. In this implementation, in addition to position coordinates of each touch point, a touch moment of each touch point needs to be obtained. Further, on a basis of obtaining the entering coordinates and/or the leaving coordinates for each preset region, an entering moment corresponding to the entering coordinates and/or a leaving moment corresponding to the leaving coordinates are calculated by using a touch moment of a touch point used when the entering coordinates and/or the leaving coordinates are calculated and by using a distance between the touch point used when the entering coordinates and/or the leaving coordinates are calculated and the entering coordinates and/or the leaving coordinates. Herein, calculating the entering moment of each preset region is used as an example for description. For example, touch points P and Q are used for calculating the entering coordinates. Touch moments corresponding to P and Q are T1 and T2 respectively. It can be learned, by means of calculation, that P is closer to the entering coordinates, and the touch moment corresponding to P is used as a corresponding entering moment. For another example, a ratio of a distance between P and the entering coordinates to a distance between Q and the entering coordinates may be calculated. Then, the ratio is used as a ratio of a time length between the touch moment T1 of the touch point P and the entering moment to a time length between the touch moment T2 of the touch point Q and the entering moment. Further, the entering moment of the preset region is calculated. Finally, the entering moment and/or the leaving moment of each preset region are/is determined as the time characteristic of the corresponding preset region.

It should be noted that, the manner of obtaining the operation rhythm characteristic of each preset region is merely an example. In the specific implementation process of this embodiment of the present invention, the operation rhythm characteristic of each preset region may be obtained in another manner. For example, in a case of a symbol password, a moment at which a user taps each preset region may be used as an entering moment of the preset region, and a moment for leaving each preset region is used as a leaving moment of the preset region. A position at which the user taps each preset region may be used as an entering position or a leaving position of the preset region.

In addition, in the specific implementation of step S310, operation rhythm characteristics of all preset regions that the operation gesture passes through are obtained. Particularly, when there are many preset regions, to reduce a data processing volume of the terminal, only operation rhythm characteristics of partial preset regions that the operation gesture passes through may be obtained. In the following, obtaining an operation rhythm characteristic of a preset region at a turning point of the "Z" shaped operation gesture shown in FIG. 1 or FIG. 2 is used as an example for description.

After adjacent touch points in multiple touch points of the "Z" shaped operation gesture are connected by using line segments, it is determined whether an included angle between adjacent line segments is less than an angle threshold. When the included angle between the adjacent line segments is less than the angle threshold, an operation rhythm characteristic of a preset region closest to a touch point at a corresponding included angle is obtained. For the "Z" shaped operation gesture, the angle threshold may be 70 degrees, 80 degrees, 90 degrees, or the like. After the preset region for which the operation rhythm characteristic is obtained is determined, a method similar to the foregoing implementation may be used to obtain characteristics such as an entering moment, a leaving moment, an entering position, and a leaving position of the corresponding preset region. For example, for the "Z" shaped operation gesture, when it is determined that preset regions for which operation rhythm characteristics are obtained are a third preset region and a fifth preset region, line segments that intersect with boundaries of the third preset region and the fifth preset region may be separately searched for, and position coordinates of a corresponding touch point are extracted. Then, entering coordinates and/or leaving coordinates for the third (the fifth) preset region are calculated according to the extracted position coordinates of the touch point and the third (the fifth) preset region by using the interpolation method. Further, an entering moment corresponding to the entering coordinates and/or a leaving moment corresponding to the leaving coordinates are/is calculated according to a touch moment of the touch point used when the entering coordinates and/or the leaving coordinates are calculated and by using a distance between the touch point used when the entering coordinates and/or leaving coordinates are calculated and the entering coordinates and/or the leaving coordinates.

In step S320, an operation rhythm characteristic of each preset region is matched against a corresponding preset rhythm characteristic to obtain a matching result.

Specifically, in the specific implementation process of this embodiment of the present invention, step S320 is corresponding to different implementations as the operation rhythm characteristic varies. An example is used for description in the following:

For example, when the entering coordinates and/or the leaving coordinates for each preset region are determined as the space characteristic of the corresponding preset region, in a first specific implementation of step S320, step S320 may include:
calculating a first distance between the entering coordinates for each preset region and corresponding preset entering coordinates, and/or calculating a second distance between the leaving coordinates for each preset region and corresponding preset leaving coordinates; and
using the first distance and/or the second distance, obtained by means of calculation, of each preset region as a matching result.

For another example, when the entering moment and/or the leaving moment of each preset region are/is determined as the time characteristic of the corresponding preset region, in a second specific implementation of step S320, step S320 may include:
calculating a first time interval between the leaving moment and the entering moment of each preset region, and/or calculating a second time interval for the operation gesture sliding from each preset region to an adjacent preset region in a sliding direction of the operation gesture;
calculating a first time difference between the first time interval of each preset region and a corresponding first time threshold, and/or calculating a second time difference between the second time interval of each preset region and a corresponding second time threshold; and
using the first time difference and/or the second time difference, obtained by means of calculation, of each preset region as a matching result.

Alternatively, when the entering moment and/or the leaving moment of each preset region are/is determined as the time characteristic of the corresponding preset region, in a third specific implementation of step S320, step S320 may include:
calculating a first time interval between the leaving moment and the entering moment of each preset region, calculating a sum of all first time intervals to obtain a first total time interval, calculating a first ratio of the first time interval of each preset region to the first total time interval, and calculating a first ratio difference between the first ratio of each preset region and a corresponding first ratio threshold, where the first ratio threshold corresponding to each preset region is an average value, obtained by means of calculation, of all first ratios for multiple historical verification operation gestures in a same preset region; and/or calculating a second time interval for the operation gesture sliding from each preset region to an adjacent preset region in a sliding direction of the operation gesture, calculating a sum of all second time intervals to obtain a second total time interval, calculating a second ratio of the second time interval of each preset region to the second total time interval, and calculating a second ratio difference between the second ratio of each preset region and a corresponding second ratio threshold, where the second ratio threshold corresponding to each preset region is an average value, obtained by means of calculation, of all second ratios for multiple historical verification operation gestures in a same preset region; and
using the first ratio difference and/or the second ratio difference, obtained by means of calculation, of each preset region as a matching result.

In the third specific implementation of step S320, actually, the first ratio and the second ratio reflect a relative rhythm of the operation gesture in each preset region. In a general case, a user in different states may perform a same operation gesture at different speeds, while a relative time (that is, the first ratio and the second ratio) of the operation gesture in each preset region is relatively stable. Therefore, compared with the second specific implementation, in the third specific implementation of step S320, the first ratio and/or the second ratio of each preset region can better reflect a habit of a user that performs a preset operation, and the first ratio threshold and/or the second ratio threshold of each preset region can also better reflect a habit of the user that performs the setting operation. Therefore, it is more appropriately to use the first ratio difference and/or the second ratio difference, obtained by means of calculation, of each preset region as a matching result, and a comparison between biological habit characteristics is more accurate.

In step S330, when matching results of all preset regions meet an execution condition, the terminal is controlled to execute a preset action corresponding to the operation gesture.

After the matching result of each preset region is obtained in step S320, the terminal determines, according to the matching result of each preset region, whether the matching results of all the preset regions meet the execution condition. When the matching results of all the preset regions meet the execution condition, the terminal is controlled to perform the preset operation (such as an unlocking operation or a screen locking operation) corresponding to the operation gesture. In the specific implementation process of this embodiment of the present invention, according to different actual cases, there are multiple manners of determining whether the matching results of all the preset regions meet the execution condition. An example is used for description in the following.

As shown in FIG. 4, when there are at least two preset regions, and the first distance and/or the second distance, obtained by means of calculation, of each preset region are/is used as a matching result, the determining whether matching results of all preset regions meet an execution condition may include the following steps.

In step S410, an average value of all first distances is calculated to obtain a first average distance.

In step S420, it is determined whether the first average distance is less than a first average distance threshold.

The first average distance threshold is obtained by calculating an average value of all first distances corresponding to each historical verification operation gesture, and then by averaging the multiple average values obtained by means of calculation.

In step S430, when the first average distance is less than the first average distance threshold, it is determined that the matching results of all the preset regions meet the execution condition.

In step S440, when the first average distance is not less than the first average distance threshold, it is determined that the matching results of all the preset regions do not meet the execution condition.

In a specific implementation shown in FIG. 4, the first distance of each preset region is used as a matching result to determine whether the matching results of all the preset regions meet the execution condition. It can be understood that, similarly, the second distance of each preset region may be used as a matching result to determine whether the matching results of all the preset regions meet the execution condition. Alternatively, both the first distance and the second distance of each preset region may be used as a matching result to determine whether the matching results of all the preset regions meet the execution condition. A determining process is similar to the specific implementation shown in FIG. 4, and details are not described herein again.

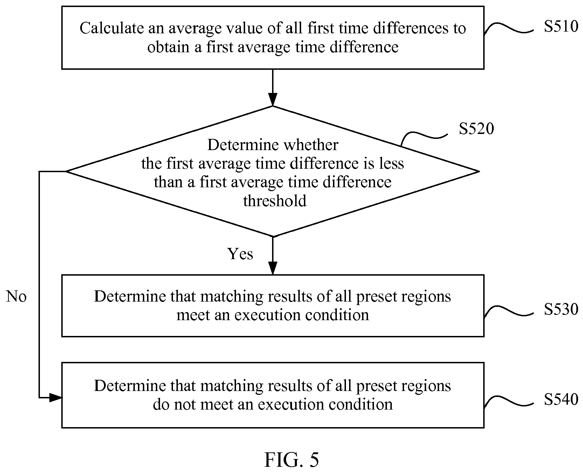

As shown in FIG. 5, when there are at least two preset regions, and the first time difference and/or the second time difference, obtained by means of calculation, of each preset region are/is used as a matching result, the determining whether matching results of all preset regions meet an execution condition may include the following steps.

In step S510, an average value of all first time differences is calculated to obtain a first average time difference.

In step S520, it is determined whether the first average time difference is less than a first average time difference threshold.

The first average time difference threshold is obtained by calculating an average value of all first time differences corresponding to each historical verification operation gesture, and then by averaging the multiple average values obtained by means of calculation.

In step S530, when the first average time difference is less than the first average time difference threshold, it is determined that the matching results of all the preset regions meet the execution condition.

In step S540, when the first average time difference is not less than the first average time difference threshold, it is determined that the matching results of all the preset regions do not meet the execution condition.

In a specific implementation shown in FIG. 5, the first time difference of each preset region is used as a matching result to determine whether the matching results of all the preset regions meet the execution condition. It can be understood that, similarly, the second time difference of each preset region may be used as a matching result to determine whether the matching results of all the preset regions meet the execution condition. Alternatively, both the first time difference and the second time difference of each preset region may be used as a matching result to determine whether the matching results of all the preset regions meet the execution condition. A determining process is similar to the specific implementation shown in FIG. 5, and details are not described herein again.

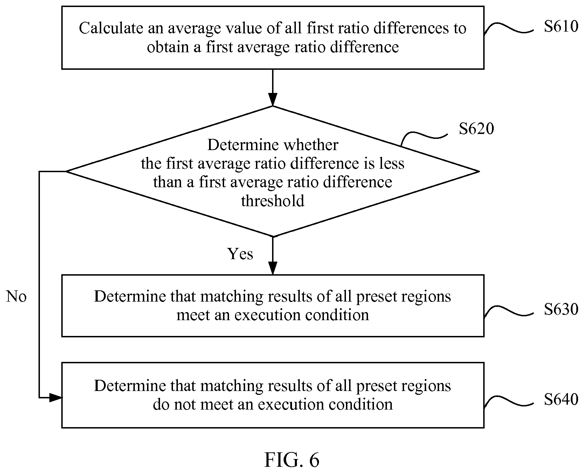

As shown in FIG. 6, when there are at least two preset regions, and the first ratio difference and/or the second ratio difference, obtained by means of calculation, of each preset region are/is used as a matching result, the determining whether matching results of all preset regions meet an execution condition may include the following steps.

In step S610, an average value of all first ratio differences is calculated to obtain a first average ratio difference.

In step S620, it is determined whether the first average ratio difference is less than a first average ratio difference threshold.

The first average ratio difference threshold is obtained by calculating an average value of all first ratio differences corresponding to each historical verification operation gesture, and then by averaging the multiple average values obtained by means of calculation.

In step S630, when the first average ratio difference is less than the first average ratio difference threshold, it is determined that the matching results of all the preset regions meet the execution condition.

In step S640, when the first average ratio difference is not less than the first average ratio difference threshold, it is determined that the matching results of all the preset regions do not meet the execution condition.

In a specific implementation shown in FIG. 6, the first ratio difference of each preset region is used as a matching result to determine whether the matching results of all the preset regions meet the execution condition. It can be understood that, similarly, the second ratio difference of each preset region may be used as a matching result to determine whether the matching results of all the preset regions meet the execution condition. Alternatively, both the first ratio difference and the second ratio difference of each preset region may be used as a matching result to determine whether the matching results of all the preset regions meet the execution condition. A determining process is similar to the specific implementation shown in FIG. 6, and details are not described herein again.

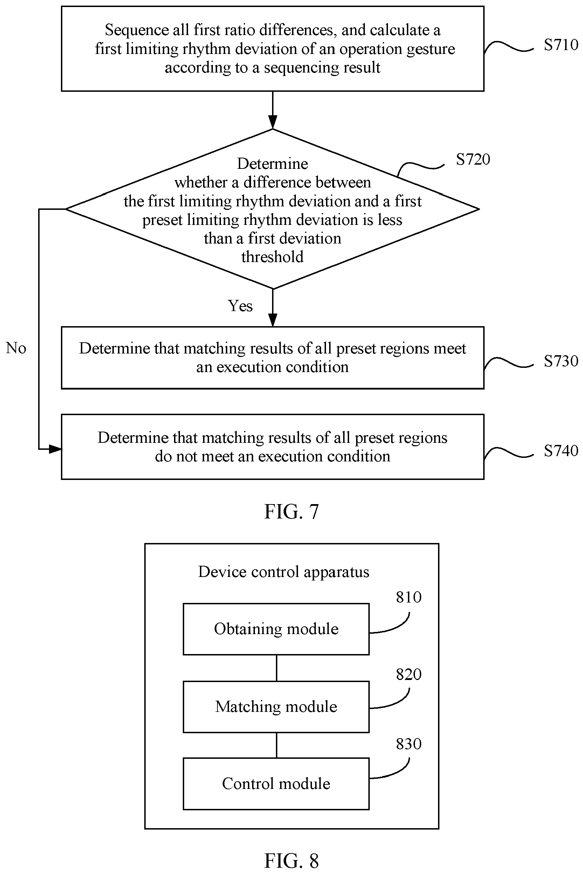

As shown in FIG. 7, when there are at least two preset regions, and the first ratio difference and/or the second ratio difference, obtained by means of calculation, of each preset region are/is used as a matching result, the determining whether matching results of all preset regions meet an execution condition may include the following steps.

In step S710, all first ratio differences are sequenced, and a first limiting rhythm deviation of the operation gesture is calculated according to a sequencing result.

In step S720, it is determined whether a difference between the first limiting rhythm deviation and a first preset limiting rhythm deviation is less than a first deviation threshold.

The first deviation threshold is a maximum difference among absolute differences between first limiting rhythm deviations corresponding to the multiple historical verification operation gestures and the first preset limiting rhythm deviation.

In step S730, when the difference between the first limiting rhythm deviation and the first preset limiting rhythm deviation is less than the first deviation threshold, it is determined that the matching results of all the preset regions meet the execution condition.

In step S740, when the difference between the first limiting rhythm deviation and the first preset limiting rhythm deviation is not less than the first deviation threshold, it is determined that the matching results of all the preset regions do not meet the execution condition.

In a specific implementation shown in FIG. 7, the first ratio difference of each preset region is used as a matching result to determine whether the matching results of all the preset regions meet the execution condition. It can be understood that, similarly, the second ratio difference of each preset region may be used as a matching result to determine whether the matching results of all the preset regions meet the execution condition. Alternatively, both the first ratio difference and the second ratio difference of each preset region may be used as a matching result to determine whether the matching results of all the preset regions meet the execution condition. A determining process is similar to the specific implementation shown in FIG. 7, and details are not described herein again.

In this embodiment of the present invention, the terminal first obtains the operation rhythm characteristic presented when the operation gesture passes through the at least one preset region on the touchscreen of the terminal, and matches the operation rhythm characteristic of each preset region against the corresponding preset rhythm characteristic to obtain the matching result; and when the matching results of all the preset regions meet the execution condition, the terminal is controlled to execute the preset action corresponding to the operation gesture. In the technical solution of the present invention, the operation rhythm characteristic of each preset region, on the touchscreen of the terminal, through which the operation gesture passes is matched against the corresponding preset rhythm characteristic to obtain the matching result. The preset action corresponding to the operation gesture is executed on the terminal only when the matching results of all the preset regions meet the execution condition. Generally, different users have more or less different operation rhythm characteristics when performing an operation gesture in each preset region. Therefore, even though the operation gesture is leaked out due to a cause such as hitting the library, peeping, or smearing, an attacker cannot perform a preset operation on the terminal by taking advantage of the operation gesture that was leaked out. That is, the technical solution of the present invention can reduce a risk of compromising privacy of a user stored in a terminal.

Corresponding to the device control method in the foregoing embodiment, an embodiment of the present invention further provides a device control apparatus.

Referring to FIG. 8, FIG. 8 is a schematic structural diagram of a device control apparatus according to an embodiment of the present invention. The apparatus is configured to execute the device control method shown in FIG. 3 to FIG. 7, and is applied to a terminal, such as a mobile phone or an iPad, on which a pattern password or a symbol password can be set. The apparatus may include an obtaining module 810, a matching module 820, and a control module 830.

The obtaining module 810 is configured to obtain an operation rhythm characteristic presented when an operation gesture passes through at least one preset region on a touchscreen of the terminal.

The matching module 820 is configured to match an operation rhythm characteristic of each preset region against a corresponding preset rhythm characteristic to obtain a matching result.

The control module 830 is configured to: when matching results of all preset regions meet an execution condition, control the terminal to execute a preset action corresponding to the operation gesture.

In this embodiment of the present invention, the terminal first obtains the operation rhythm characteristic presented when the operation gesture passes through the at least one preset region on the touchscreen of the terminal, and matches the operation rhythm characteristic of each preset region against the corresponding preset rhythm characteristic to obtain the matching result; and when the matching results of all the preset regions meet the execution condition, the terminal is controlled to execute the preset action corresponding to the operation gesture. In the technical solution of the present invention, the operation rhythm characteristic of each preset region, on the touchscreen of the terminal, through which the operation gesture passes is matched against the corresponding preset rhythm characteristic to obtain the matching result. The preset action corresponding to the operation gesture is executed on the terminal only when the matching results of all the preset regions meet the execution condition. Generally, different users have more or less different operation rhythm characteristics when performing an operation gesture in each preset region. Therefore, even though the operation gesture is leaked out due to a cause such as hitting the library, peeping, or smearing, an attacker cannot perform a preset operation on the terminal by taking advantage of the operation gesture that was leaked out. That is, the technical solution of the present invention can reduce a risk of compromising privacy of a user stored in a terminal.

Optionally, in a specific implementation of the present invention, the operation rhythm characteristic includes a space characteristic. The obtaining module 810 is specifically configured to: obtain position coordinates of multiple touch points of the operation gesture and boundary coordinates of each preset region; determine, by using an interpolation method, entering coordinates and/or leaving coordinates for each preset region through which the operation gesture passes; and determine the entering coordinates and/or the leaving coordinates for each preset region as the space characteristic of the corresponding preset region.

Optionally, in a specific implementation of the present invention, the matching module 820 is specifically configured to: calculate a first distance between the entering coordinates for each preset region and corresponding preset entering coordinates, and/or calculate a second distance between the leaving coordinates for each preset region and corresponding preset leaving coordinates; and use the first distance and/or the second distance, obtained by means of calculation, of each preset region as a matching result.

Optionally, in a specific implementation of the present invention, there are at least two preset regions, and the apparatus further includes: a first calculation module, a first judging module, and a first determining module.

The first calculation module is configured to calculate an average value of all first distances to obtain a first average distance.

The first judging module is configured to determine whether the first average distance is less than a first average distance threshold. The first average distance threshold is obtained by calculating an average value of all first distances corresponding to each historical verification operation gesture, and then by averaging the multiple average values obtained by means of calculation.

The first determining module is configured to: when the first average distance is less than the first average distance threshold, determine that the matching results of all the preset regions meet the execution condition.

Optionally, in a specific implementation of the present invention, there are at least two preset regions, and the apparatus further includes: a second calculation module, a second judging module, and a second determining module.

The second calculation module is configured to calculate an average value of all second distances to obtain a second average distance.

The second judging module is configured to determine whether the second average distance is less than a second average distance threshold. The second average distance threshold is obtained by calculating an average value of all second distances corresponding to each historical verification operation gesture, and then by averaging the multiple average values obtained by means of calculation.

The second determining module is configured to: when the second average distance is less than the second average distance threshold, determine that the matching results of all the preset regions meet the execution condition.

Optionally, in a specific implementation of the present invention, there are at least two preset regions, and the apparatus further includes: a third calculation module, a third judging module, and a third determining module.

The third calculation module is configured to: calculate an average value of all first distances to obtain a first average distance, and calculate an average value of all second distances to obtain a second average distance.

The third judging module is configured to: determine whether the first average distance is less than a first average distance threshold, and determine whether the second average distance is less than a second average distance threshold.

The third determining module is configured to: when the first average distance is less than the first average distance threshold, and the second average distance is less than the second average distance threshold, determine that the matching results of all the preset regions meet the execution condition.

Optionally, in a specific implementation of the present invention, the operation rhythm characteristic includes a time characteristic. The obtaining module 810 is specifically configured to: obtain position coordinates of multiple touch points of the operation gesture and boundary coordinates of each preset region; determine, by using an interpolation method, entering coordinates and/or leaving coordinates for each preset region through which the operation gesture passes; obtain an entering moment corresponding to the entering coordinates and/or a leaving moment corresponding to the leaving coordinates for each preset region; and determine the entering moment and/or the leaving moment of each preset region as the time characteristic of the corresponding preset region.

Optionally, in a specific implementation of the present invention, the matching module 820 is specifically configured to: calculate a first time interval between the leaving moment and the entering moment of each preset region, and/or calculate a second time interval for the operation gesture sliding from each preset region to an adjacent preset region in a sliding direction of the operation gesture; calculate a first time difference between the first time interval of each preset region and a corresponding first time threshold, and/or calculate a second time difference between the second time interval of each preset region and a corresponding second time threshold; and use the first time difference and/or the second time difference, obtained by means of calculation, of each preset region as a matching result.

Optionally, in a specific implementation of the present invention, there are at least two preset regions, and the apparatus further includes: a fourth calculation module, a fourth judging module, and a fourth determining module.

The fourth calculation module is configured to calculate an average value of all first time differences to obtain a first average time difference.

The fourth judging module is configured to determine whether the first average time difference is less than a first average time difference threshold. The first average time difference threshold is obtained by calculating an average value of all first time differences corresponding to each historical verification operation gesture, and then by averaging the multiple average values obtained by means of calculation.

The fourth determining module is configured to: when the first average time difference is less than the first average time difference threshold, determine that the matching results of all the preset regions meet the execution condition.

Optionally, in a specific implementation of the present invention, there are at least two preset regions, and the apparatus further includes: a fifth calculation module, a fifth judging module, and a fifth determining module.

The fifth calculation module is configured to calculate an average value of all second time differences to obtain a second average time difference.

The fifth judging module is configured to determine whether the second average time difference is less than a second average time difference threshold. The second average time difference threshold is obtained by calculating an average value of all second time differences corresponding to each historical verification operation gesture, and then by averaging the multiple average values obtained by means of calculation.

The fifth determining module is configured to: when the second average time difference is less than the second average time difference threshold, determine that the matching results of all the preset regions meet the execution condition.

Optionally, in a specific implementation of the present invention, there are at least two preset regions, and the apparatus further includes: a sixth calculation module, a sixth judging module, and a sixth determining module.

The sixth calculation module is configured to: calculate an average value of all first time differences to obtain a first average time difference, and calculate an average value of all second time differences to obtain a second average time difference.

The sixth judging module is configured to: determine whether the first average time difference is less than a first average time difference threshold, and determine whether the second average time difference is less than a second average time difference threshold.

The sixth determining module is configured to: when the first average time difference is less than the first average time difference threshold, and the second average time difference is less than the second average time difference threshold, determine that the matching results of all the preset regions meet the execution condition.

Optionally, in a specific implementation of the present invention, the matching module 820 is specifically configured to: calculate a first time interval between the leaving moment and the entering moment of each preset region, calculate a sum of all first time intervals to obtain a first total time interval, calculate a first ratio of the first time interval of each preset region to the first total time interval, and calculate a first ratio difference between the first ratio of each preset region and a corresponding first ratio threshold, where the first ratio threshold corresponding to each preset region is an average value, obtained by means of calculation, of all first ratios for multiple historical verification operation gestures in a same preset region; and/or calculate a second time interval for the operation gesture sliding from each preset region to an adjacent preset region in a sliding direction of the operation gesture, calculate a sum of all second time intervals to obtain a second total time interval, calculate a second ratio of the second time interval of each preset region to the second total time interval, and calculate a second ratio difference between the second ratio of each preset region and a corresponding second ratio threshold, where the second ratio threshold corresponding to each preset region is an average value, obtained by means of calculation, of all second ratios for multiple historical verification operation gestures in a same preset region; and use the first ratio difference and/or the second ratio difference, obtained by means of calculation, of each preset region as a matching result.

Optionally, in a specific implementation of the present invention, there are at least two preset regions, and the apparatus further includes: a seventh calculation module, a seventh judging module, and a seventh determining module.

The seventh calculation module is configured to calculate an average value of all first ratio differences to obtain a first average ratio difference.

The seventh judging module is configured to determine whether the first average ratio difference is less than a first average ratio difference threshold. The first average ratio difference threshold is obtained by calculating an average value of all first ratio differences corresponding to each historical verification operation gesture, and then by averaging the multiple average values obtained by means of calculation.

The seventh determining module is configured to: when the first average ratio difference is less than the first average ratio difference threshold, determine that the matching results of all the preset regions meet the execution condition.

Optionally, in a specific implementation of the present invention, there are at least two preset regions, and the apparatus further includes: an eighth calculation module, an eighth judging module, and an eighth determining module.

The eighth calculation module is configured to: sequence all first ratio differences, and calculate a first limiting rhythm deviation of the operation gesture according to a sequencing result.

The eighth judging module is configured to determine whether a difference between the first limiting rhythm deviation and a first preset limiting rhythm deviation is less than a first deviation threshold. The first deviation threshold is a maximum difference among absolute differences between first limiting rhythm deviations corresponding to the multiple historical verification operation gestures and the first preset limiting rhythm deviation.

The eighth determining module is configured to: when the difference between the first limiting rhythm deviation and the first preset limiting rhythm deviation is less than the first deviation threshold, determine that the matching results of all the preset regions meet the execution condition.

Optionally, in a specific implementation of the present invention, there are at least two preset regions, and the apparatus further includes: a ninth calculation module, a ninth judging module, and a ninth determining module.

The ninth calculation module is configured to calculate an average value of all second ratio differences to obtain a second average ratio difference.

The ninth judging module is configured to determine whether the second average ratio difference is less than a second average ratio difference threshold. The second average ratio difference threshold is obtained by calculating an average value of all second ratio differences corresponding to each historical verification operation gesture, and then by averaging the multiple average values obtained by means of calculation.

The ninth determining module is configured to: when the second average ratio difference is less than the second average ratio difference threshold, determine that the matching results of all the preset regions meet the execution condition.

Optionally, in a specific implementation of the present invention, there are at least two preset regions, and the apparatus further includes: a tenth calculation module, a tenth judging module, and a tenth determining module.

The tenth calculation module is configured to: sequence all second ratio differences, and calculate a second limiting rhythm deviation of the operation gesture according to a sequencing result.

The tenth judging module is configured to determine whether a difference between the second limiting rhythm deviation and a second preset limiting rhythm deviation is less than a second deviation threshold. The second deviation threshold is a maximum difference among absolute differences between second limiting rhythm deviations corresponding to the multiple historical verification operation gestures and the second preset limiting rhythm deviation.

The tenth determining module is configured to: when the difference between the second limiting rhythm deviation and the second preset limiting rhythm deviation is less than the second deviation threshold, determine that the matching results of all the preset regions meet the execution condition.

Optionally, in a specific implementation of the present invention, there are at least two preset regions, and the apparatus further includes: an eleventh calculation module, an eleventh judging module, and an eleventh determining module.

The eleventh calculation module is configured to: calculate an average value of all first ratio differences to obtain a first average ratio difference, and calculate an average value of all second ratio differences to obtain a second average ratio difference.

The eleventh judging module is configured to: determine whether the first average ratio difference is less than a first average ratio difference threshold, and determine whether the second average ratio difference is less than a second average ratio difference threshold.

The eleventh determining module is configured to: when the first average ratio difference is less than the first average ratio difference threshold, and the second average ratio difference is less than the second average ratio difference threshold, determine that the matching results of all the preset regions meet the execution condition.

Optionally, in a specific implementation of the present invention, there are at least two preset regions, and the apparatus further includes: a twelfth calculation module, a twelfth judging module, and a twelfth determining module.

The twelfth calculation module is configured to: sequence all first ratio differences, and calculate a first limiting rhythm deviation of the operation gesture according to a sequencing result; and sequence all second ratio differences, and calculate a second limiting rhythm deviation of the operation gesture according to a sequencing result.

The twelfth judging module is configured to: determine whether a difference between the first limiting rhythm deviation and a first preset limiting rhythm deviation is less than a first deviation threshold, and determine whether a difference between the second limiting rhythm deviation and a second preset limiting rhythm deviation is less than a second deviation threshold.

The twelfth determining module is configured to: when the difference between the first limiting rhythm deviation and the first preset limiting rhythm deviation is less than the first deviation threshold, and the difference between the second limiting rhythm deviation and the second preset limiting rhythm deviation is less than the second deviation threshold, determine that the matching results of all the preset regions meet the execution condition.

An embodiment of the present invention provides a terminal, including a touchscreen and a processor. The processor is configured to obtain, by using the touchscreen, an operation rhythm characteristic presented when an operation gesture passes through at least one preset region on the touchscreen of the terminal. The processor is further configured to: match an operation rhythm characteristic of each preset region against a corresponding preset rhythm characteristic to obtain a matching result; and when matching results of all preset regions meet an execution condition, control the terminal to execute a preset action corresponding to the operation gesture.

The terminal may include a mobile phone, a tablet computer, a PDA (Personal Digital Assistant, personal digital assistant), a POS (Point of Sales, point of sale), a vehicle-mounted computer, and the like.

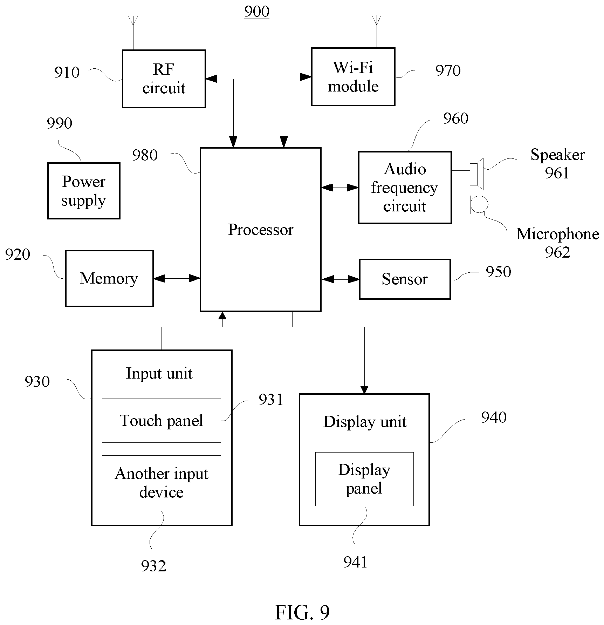

An example in which the terminal is a mobile phone is used. FIG. 9 shows a block diagram of a partial structure of a mobile phone 900 related to this embodiment of the present invention. The mobile phone 900 may execute the device control method shown in the foregoing method embodiment. Referring to FIG. 9, the mobile phone 900 includes components such as an RF (Radio Frequency, radio frequency) circuit 910, a memory 920, an input unit 930, a display unit 940, a sensor 950, an audio frequency circuit 960, a Wi-Fi (wireless fidelity, Wireless Fidelity) module 970, a processor 980, and a power supply 990. A person skilled in the art can understand that, the structure of the mobile phone shown in FIG. 9 does not constitute a limitation on the mobile phone, and the mobile phone may include more or fewer components than those shown in the diagram, or may combine some components or have different component configurations.

In the following, each component of the mobile phone 900 is described in detail with reference to FIG. 9.

The RF circuit 910 may be configured to receive and send information, or receive and send a signal during a call. Particularly, the RF circuit 910 receives downlink information of a base station, and sends the downlink information to the processor 980 for processing; and sends uplink data to the base station. Generally, the RF circuit includes but is not limited to an antenna, at least one amplifier, a transceiver, a coupler, an LNA (Low Noise Amplifier, low noise amplifier), a duplexer, and the like. In addition, the RF circuit 910 may communicate with a network and another device by means of wireless communication. Any communications standard or protocol may be used for the wireless communication, including but not limited to GSM (Global System of Mobile communication, Global System for Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), email, SMS (Short Messaging Service, short message service), or the like.

The memory 920 may be configured to store a software program and a module. By running the software program and the module stored in the memory 920, the processor 980 executes various function applications of the mobile phone 900 and performs data processing. The memory 920 may mainly include a program storage region and a data storage region. The program storage region may store an operating system, an application program required for at least one function (such as a sound playback function or an image playback function), and the like. The data storage region may store data (such as audio data or a phone book) created according to use of the mobile phone 900, and the like. In addition, the memory 920 may include a high-speed random access memory, and may further include a non-volatile memory such as at least one disk storage device, a flash memory device, or another volatile solid-state storage device.

The input unit 930 may be configured to: receive entered numeral or character information, and generate key signal input related to user setting and function control of the mobile phone 900. Specifically, the input unit 930 may include a touch panel 931 and another input device 932. The touch panel 931, also referred to as a touchscreen, may collect a touch operation performed by a user on or near the touch panel 931 (for example, an operation performed by the user on the touch panel 931 or near the touch panel 931 by using any suitable object or accessory such as a finger or a stylus), and drive a corresponding connection apparatus according to a preset program. Optionally, the touch panel 931 may include two parts: a touch detection apparatus and a touch controller. The touch detection apparatus detects a touch azimuth of the user, detects a signal brought by a touch operation, and transfers the signal to the touch controller. The touch controller receives touch information from the touch detection apparatus, converts the touch information into touch point coordinates, and sends the touch point coordinates to the processor 980, and can receive a command sent by the processor 980 and execute the command. In addition, the touch panel 931 may be implemented in multiple types such as a resistive type, a capacitive type, an infrared type, and a surface acoustic wave type. In addition to the touch panel 931, the input unit 930 may include the another input device 932. Specifically, the another input device 932 may include but is not limited to one or more of a physical keyboard, a function key (such as a volume control key or a switch key), a trackball, a mouse, a joystick, and the like.

The display unit 940 may be configured to display information entered by the user or information provided for the user and various menus of the mobile phone 900. The display unit 940 may include a display panel 941. Optionally, the display panel 941 may be configured by using an LCD (Liquid Crystal Display, liquid crystal display), an OLED (Organic Light-Emitting Diode, organic light-emitting diode), or the like. Further, the touch panel 931 may cover the display panel 941. After detecting a touch operation on or near the touch panel 931, the touch panel 931 transfers the touch operation to the processor 980 to determine a type of a touch event. Then the processor 980 provides corresponding visual output on the display panel 941 according to the type of the touch event. Although in FIG. 9, the touch panel 931 and the display panel 941 are used as two independent components to implement input and input functions of the mobile phone 900, in some embodiments, the touch panel 931 may be integrated with the display panel 941 to implement the input and output functions of the mobile phone 900.

The mobile phone 900 may further include at least one sensor 950 such as a light sensor, a motion sensor, or another sensor. Specifically, the light sensor may include an ambient light sensor and a proximity sensor. The ambient light sensor may adjust luminance of the display panel 941 according to brightness of ambient light. The proximity sensor may turn off the display panel 941 and/or backlight when the mobile phone 900 moves to an ear of the user. As a type of motion sensor, an accelerometer sensor may detect a value of accelerations in different directions (usually, there are three axes), may detect a value and a direction of gravity in a static state, and may be configured to identify a mobile phone posture (such as switch between landscape and portrait screens, a related game, and magnetometer posture calibration), and a vibration-recognition related function (such as a pedometer and a knock), and the like. The mobile phone 900 may be further equipped with a gyroscope, a barometer, a hygrometer, a thermometer, an infrared sensor, and another sensor, and details are not described herein.

The audio frequency circuit 960, a speaker 961, and a microphone 962 may provide an audio interface between the user and the mobile phone 900. The audio frequency circuit 960 may receive audio data, convert the audio data into an electrical signal, and transmit the electrical signal to the speaker 961, and the speaker 961 converts the electrical signal into a sound signal for output. In addition, the microphone 962 converts a collected sound signal into an electrical signal, and the audio frequency circuit 960 receives the electrical signal and converts the electrical signal into audio data, and then outputs the audio data to the RF circuit 908, so as to send the audio data to, for example, another mobile phone, or output the audio data to the memory 920 for further processing.

Wi-Fi is a short-range wireless transmission technology. By using the Wi-Fi module 970, the mobile phone 900 may help the user to send or receive an e-mail, browse a web page, access streaming media, and the like. The Wi-Fi module 970 provides wireless broadband Internet access for the user. Although FIG. 9 shows the Wi-Fi module 970, it can be understood that, the Wi-Fi module 970 is not a mandatory component of the mobile phone 900 and may be omitted according to a requirement without changing the essence of the present invention.

The processor 980 is a control center of the mobile phone 900, uses various interfaces and lines to connect all parts of the entire mobile phone, and executes various functions of the mobile phone 900 and processes data by running or executing the software program and/or the module stored in the memory 920 and invoking data stored in the memory 920, so as to perform overall monitoring on the mobile phone. Optionally, the processor 980 may include one or more processing units. Preferably, an application processor and a modem processor may be integrated in the processor 980. The application processor mainly processes an operating system, a user interface, an application program, and the like. The modem processor mainly processes wireless communication. It can be understood that, the modem processor may not be integrated in the processor 980.

The mobile phone 900 further includes the power supply 990 (such as a battery) that supplies power to each component. Preferably, the power supply may be logically connected to the processor 980 by using a power supply management system, thereby implementing functions such as charging management, discharging management, and power consumption management by using the power supply management system.

The mobile phone 900 may further include a camera, a Bluetooth module, and the like, although not shown. Details are not described herein.

A person skilled in the art may clearly understand that, the technologies in the embodiments of the present invention may be implemented by software in addition to a necessary general hardware platform. Based on such an understanding, the technical solutions of the embodiments of the present invention essentially or the part contributing to the prior art may be implemented in a form of a software product. The software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of the present invention.

The embodiments in this specification are all described in a progressive manner, for same or similar parts in the embodiments, reference may be made mutually, and each embodiment focuses on a difference from other embodiments. Especially, system and apparatus embodiments are basically similar to a method embodiment, and therefore are described briefly. For related parts, refer to descriptions in the method embodiments.

The foregoing descriptions are implementations of the present invention, but are not intended to limit the protection scope of the present invention. Any modification, equivalent replacement, or improvement made without departing from the spirit and principle of the present invention shall fall within the protection scope of the present invention.

## Claims

1. A device control method, applied to a terminal, wherein the method comprises:
obtaining an operation rhythm characteristic presented when an operation gesture passes through at least one preset region on a touchscreen of the terminal;
matching an operation rhythm characteristic of each preset region against a corresponding preset rhythm characteristic to obtain a matching result; and
when matching results of all preset regions meet an execution condition, controlling the terminal to execute a preset action corresponding to the operation gesture.

2. The method according to claim 1, wherein the operation rhythm characteristic comprises a space characteristic; and
the obtaining an operation rhythm characteristic presented when an operation gesture passes through at least one preset region on a touchscreen of the terminal comprises:
obtaining position coordinates of multiple touch points of the operation gesture and boundary coordinates of each preset region;
determining, by using an interpolation method, entering coordinates and/or leaving coordinates for each preset region through which the operation gesture passes; and
determining the entering coordinates and/or the leaving coordinates for each preset region as the space characteristic of the corresponding preset region.

3. The method according to claim 2, wherein the matching an operation rhythm characteristic of each preset region against a corresponding preset rhythm characteristic to obtain a matching result comprises:
calculating a first distance between the entering coordinates for each preset region and corresponding preset entering coordinates, and/or calculating a second distance between the leaving coordinates for each preset region and corresponding preset leaving coordinates; and
using the first distance and/or the second distance, obtained by means of calculation, of each preset region as a matching result.

4. The method according to claim 3, wherein there are at least two preset regions, and the method further comprises:
calculating an average value of all first distances to obtain a first average distance;
determining whether the first average distance is less than a first average distance threshold, wherein the first average distance threshold is obtained by calculating an average value of all first distances corresponding to each historical verification operation gesture, and then by averaging the multiple average values obtained by means of calculation; and
when the first average distance is less than the first average distance threshold, determining that the matching results of all the preset regions meet the execution condition.

5. The method according to claim 3, wherein there are at least two preset regions, and the method further comprises:
calculating an average value of all second distances to obtain a second average distance;
determining whether the second average distance is less than a second average distance threshold, wherein the second average distance threshold is obtained by calculating an average value of all second distances corresponding to each historical verification operation gesture, and then by averaging the multiple average values obtained by means of calculation; and
when the second average distance is less than the second average distance threshold, determining that the matching results of all the preset regions meet the execution condition.

6. The method according to claim 3, wherein there are at least two preset regions, and the method further comprises:
calculating an average value of all first distances to obtain a first average distance, and calculating an average value of all second distances to obtain a second average distance;
determining whether the first average distance is less than a first average distance threshold, and determining whether the second average distance is less than a second average distance threshold; and
when the first average distance is less than the first average distance threshold, and the second average distance is less than the second average distance threshold, determining that the matching results of all the preset regions meet the execution condition.

7. The method according to claim 1, wherein the operation rhythm characteristic comprises a time characteristic; and
the obtaining an operation rhythm characteristic presented when an operation gesture passes through at least one preset region on a touchscreen of the terminal comprises:
obtaining position coordinates of multiple touch points of the operation gesture and boundary coordinates of each preset region;
determining, by using an interpolation method, entering coordinates and/or leaving coordinates for each preset region through which the operation gesture passes;
obtaining an entering moment corresponding to the entering coordinates and/or a leaving moment corresponding to the leaving coordinates for each preset region; and
determining the entering moment and/or the leaving moment of each preset region as the time characteristic of the corresponding preset region.

8. The method according to claim 7, wherein the matching an operation rhythm characteristic of each preset region against a corresponding preset rhythm characteristic to obtain a matching result comprises:
calculating a first time interval between the leaving moment and the entering moment of each preset region, and/or calculating a second time interval for the operation gesture sliding from each preset region to an adjacent preset region in a sliding direction of the operation gesture;
calculating a first time difference between the first time interval of each preset region and a corresponding first time threshold, and/or calculating a second time difference between the second time interval of each preset region and a corresponding second time threshold; and
using the first time difference and/or the second time difference, obtained by means of calculation, of each preset region as a matching result.

9. The method according to claim 8, wherein there are at least two preset regions, and the method further comprises:
calculating an average value of all first time differences to obtain a first average time difference;
determining whether the first average time difference is less than a first average time difference threshold, wherein the first average time difference threshold is obtained by calculating an average value of all first time differences corresponding to each historical verification operation gesture, and then by averaging the multiple average values obtained by means of calculation; and
when the first average time difference is less than the first average time difference threshold, determining that the matching results of all the preset regions meet the execution condition.

10. The method according to claim 8, wherein there are at least two preset regions, and the method further comprises:
calculating an average value of all second time differences to obtain a second average time difference;
determining whether the second average time difference is less than a second average time difference threshold, wherein the second average time difference threshold is obtained by calculating an average value of all second time differences corresponding to each historical verification operation gesture, and then by averaging the multiple average values obtained by means of calculation; and
when the second average time difference is less than the second average time difference threshold, determining that the matching results of all the preset regions meet the execution condition.

11. The method according to claim 8, wherein there are at least two preset regions, and the method further comprises:
calculating an average value of all first time differences to obtain a first average time difference, and calculating an average value of all second time differences to obtain a second average time difference;
determining whether the first average time difference is less than a first average time difference threshold, and determining whether the second average time difference is less than a second average time difference threshold; and
when the first average time difference is less than the first average time difference threshold, and the second average time difference is less than the second average time difference threshold, determining that the matching results of all the preset regions meet the execution condition.

12. The method according to claim 7, wherein the matching an operation rhythm characteristic of each preset region against a corresponding preset rhythm characteristic to obtain a matching result comprises:
calculating a first time interval between the leaving moment and the entering moment of each preset region, calculating a sum of all first time intervals to obtain a first total time interval, calculating a first ratio of the first time interval of each preset region to the first total time interval, and calculating a first ratio difference between the first ratio of each preset region and a corresponding first ratio threshold, wherein the first ratio threshold corresponding to each preset region is an average value, obtained by means of calculation, of all first ratios for multiple historical verification operation gestures in a same preset region; and/or calculating a second time interval for the operation gesture sliding from each preset region to an adjacent preset region in a sliding direction of the operation gesture, calculating a sum of all second time intervals to obtain a second total time interval, calculating a second ratio of the second time interval of each preset region to the second total time interval, and calculating a second ratio difference between the second ratio of each preset region and a corresponding second ratio threshold, wherein the second ratio threshold corresponding to each preset region is an average value, obtained by means of calculation, of all second ratios for multiple historical verification operation gestures in a same preset region; and
using the first ratio difference and/or the second ratio difference, obtained by means of calculation, of each preset region as a matching result.

13. The method according to claim 12, wherein there are at least two preset regions, and the method further comprises:
calculating an average value of all first ratio differences to obtain a first average ratio difference;
determining whether the first average ratio difference is less than a first average ratio difference threshold, wherein the first average ratio difference threshold is obtained by calculating an average value of all first ratio differences corresponding to each historical verification operation gesture, and then by averaging the multiple average values obtained by means of calculation; and
when the first average ratio difference is less than the first average ratio difference threshold, determining that the matching results of all the preset regions meet the execution condition.

14. The method according to claim 12, wherein there are at least two preset regions, and the method further comprises:
sequencing all first ratio differences, and calculating a first limiting rhythm deviation of the operation gesture according to a sequencing result;
determining whether a difference between the first limiting rhythm deviation and a first preset limiting rhythm deviation is less than a first deviation threshold, wherein the first deviation threshold is a maximum difference among absolute differences between first limiting rhythm deviations corresponding to the multiple historical verification operation gestures and the first preset limiting rhythm deviation; and
when the difference between the first limiting rhythm deviation and the first preset limiting rhythm deviation is less than the first deviation threshold, determining that the matching results of all the preset regions meet the execution condition.

15. The method according to claim 12, wherein there are at least two preset regions, and the method further comprises:
calculating an average value of all second ratio differences to obtain a second average ratio difference;
determining whether the second average ratio difference is less than a second average ratio difference threshold, wherein the second average ratio difference threshold is obtained by calculating an average value of all second ratio differences corresponding to each historical verification operation gesture, and then by averaging the multiple average values obtained by means of calculation; and
when the second average ratio difference is less than the second average ratio difference threshold, determining that the matching results of all the preset regions meet the execution condition.

16. The method according to claim 12, wherein there are at least two preset regions, and the method further comprises:
sequencing all second ratio differences, and calculating a second limiting rhythm deviation of the operation gesture according to a sequencing result;
determining whether a difference between the second limiting rhythm deviation and a second preset limiting rhythm deviation is less than a second deviation threshold, wherein the second deviation threshold is a maximum difference among absolute differences between second limiting rhythm deviations corresponding to the multiple historical verification operation gestures and the second preset limiting rhythm deviation; and
when the difference between the second limiting rhythm deviation and the second preset limiting rhythm deviation is less than the second deviation threshold, determining that the matching results of all the preset regions meet the execution condition.

17. The method according to claim 12, wherein there are at least two preset regions, and the method further comprises:
calculating an average value of all first ratio differences to obtain a first average ratio difference, and calculating an average value of all second ratio differences to obtain a second average ratio difference;
determining whether the first average ratio difference is less than a first average ratio difference threshold, and determining whether the second average ratio difference is less than a second average ratio difference threshold; and
when the first average ratio difference is less than the first average ratio difference threshold, and the second average ratio difference is less than the second average ratio difference threshold, determining that the matching results of all the preset regions meet the execution condition.

18. The method according to claim 12, wherein there are at least two preset regions, and the method further comprises:
sequencing all first ratio differences, and calculating a first limiting rhythm deviation of the operation gesture according to a sequencing result; and sequencing all second ratio differences, and calculating a second limiting rhythm deviation of the operation gesture according to a sequencing result;
determining whether a difference between the first limiting rhythm deviation and a first preset limiting rhythm deviation is less than a first deviation threshold, and determining whether a difference between the second limiting rhythm deviation and a second preset limiting rhythm deviation is less than a second deviation threshold; and
when the difference between the first limiting rhythm deviation and the first preset limiting rhythm deviation is less than the first deviation threshold, and the difference between the second limiting rhythm deviation and the second preset limiting rhythm deviation is less than the second deviation threshold, determining that the matching results of all the preset regions meet the execution condition.

19. A device control apparatus, applied to a terminal, wherein the apparatus comprises:
an obtaining module, configured to obtain an operation rhythm characteristic presented when an operation gesture passes through at least one preset region on a touchscreen of the terminal;
a matching module, configured to match an operation rhythm characteristic of each preset region against a corresponding preset rhythm characteristic to obtain a matching result; and
a control module, configured to: when matching results of all preset regions meet an execution condition, control the terminal to execute a preset action corresponding to the operation gesture.

20. The apparatus according to claim 19, wherein the operation rhythm characteristic comprises a space characteristic; and
the obtaining module is specifically configured to: obtain position coordinates of multiple touch points of the operation gesture and boundary coordinates of each preset region; determine, by using an interpolation method, entering coordinates and/or leaving coordinates for each preset region through which the operation gesture passes; and determine the entering coordinates and/or the leaving coordinates for each preset region as the space characteristic of the corresponding preset region.

21. The apparatus according to claim 20, wherein the matching module is specifically configured to: calculate a first distance between the entering coordinates for each preset region and corresponding preset entering coordinates, and/or calculate a second distance between the leaving coordinates for each preset region and corresponding preset leaving coordinates; and use the first distance and/or the second distance, obtained by means of calculation, of each preset region as a matching result.

22. The apparatus according to claim 21, wherein there are at least two preset regions, and the apparatus further comprises:
a first calculation module, configured to calculate an average value of all first distances to obtain a first average distance;
a first judging module, configured to determine whether the first average distance is less than a first average distance threshold, wherein the first average distance threshold is obtained by calculating an average value of all first distances corresponding to each historical verification operation gesture, and then by averaging the multiple average values obtained by means of calculation; and
a first determining module, configured to: when the first average distance is less than the first average distance threshold, determine that the matching results of all the preset regions meet the execution condition.

23. The apparatus according to claim 21, wherein there are at least two preset regions, and the apparatus further comprises:
a second calculation module, configured to calculate an average value of all second distances to obtain a second average distance;
a second judging module, configured to determine whether the second average distance is less than a second average distance threshold, wherein the second average distance threshold is obtained by calculating an average value of all second distances corresponding to each historical verification operation gesture, and then by averaging the multiple average values obtained by means of calculation; and
a second determining module, configured to: when the second average distance is less than the second average distance threshold, determine that the matching results of all the preset regions meet the execution condition.

24. The apparatus according to claim 21, wherein there are at least two preset regions, and the apparatus further comprises:
a third calculation module, configured to: calculate an average value of all first distances to obtain a first average distance, and calculate an average value of all second distances to obtain a second average distance;
a third judging module, configured to: determine whether the first average distance is less than a first average distance threshold, and determine whether the second average distance is less than a second average distance threshold; and
a third determining module, configured to: when the first average distance is less than the first average distance threshold, and the second average distance is less than the second average distance threshold, determine that the matching results of all the preset regions meet the execution condition.

25. The apparatus according to claim 19, wherein the operation rhythm characteristic comprises a time characteristic; and
the obtaining module is specifically configured to: obtain position coordinates of multiple touch points of the operation gesture and boundary coordinates of each preset region; determine, by using an interpolation method, entering coordinates and/or leaving coordinates for each preset region through which the operation gesture passes; obtain an entering moment corresponding to the entering coordinates and/or a leaving moment corresponding to the leaving coordinates for each preset region; and determine the entering moment and/or the leaving moment of each preset region as the time characteristic of the corresponding preset region.

26. The apparatus according to claim 25, wherein the matching module is specifically configured to: calculate a first time interval between the leaving moment and the entering moment of each preset region, and/or calculate a second time interval for the operation gesture sliding from each preset region to an adjacent preset region in a sliding direction of the operation gesture; calculate a first time difference between the first time interval of each preset region and a corresponding first time threshold, and/or calculate a second time difference between the second time interval of each preset region and a corresponding second time threshold; and use the first time difference and/or the second time difference, obtained by means of calculation, of each preset region as a matching result.

27. The apparatus according to claim 26, wherein there are at least two preset regions, and the apparatus further comprises:
a fourth calculation module, configured to calculate an average value of all first time differences to obtain a first average time difference;
a fourth judging module, configured to determine whether the first average time difference is less than a first average time difference threshold, wherein the first average time difference threshold is obtained by calculating an average value of all first time differences corresponding to each historical verification operation gesture, and then by averaging the multiple average values obtained by means of calculation; and
a fourth determining module, configured to: when the first average time difference is less than the first average time difference threshold, determine that the matching results of all the preset regions meet the execution condition.

28. The apparatus according to claim 26, wherein there are at least two preset regions, and the apparatus further comprises:
a fifth calculation module, configured to calculate an average value of all second time differences to obtain a second average time difference;
a fifth judging module, configured to determine whether the second average time difference is less than a second average time difference threshold, wherein the second average time difference threshold is obtained by calculating an average value of all second time differences corresponding to each historical verification operation gesture, and then by averaging the multiple average values obtained by means of calculation; and
a fifth determining module, configured to: when the second average time difference is less than the second average time difference threshold, determine that the matching results of all the preset regions meet the execution condition.

29. The apparatus according to claim 26, wherein there are at least two preset regions, and the apparatus further comprises:
a sixth calculation module, configured to: calculate an average value of all first time differences to obtain a first average time difference, and calculate an average value of all second time differences to obtain a second average time difference;
a sixth judging module, configured to: determine whether the first average time difference is less than a first average time difference threshold, and determine whether the second average time difference is less than a second average time difference threshold; and
a sixth determining module, configured to: when the first average time difference is less than the first average time difference threshold, and the second average time difference is less than the second average time difference threshold, determine that the matching results of all the preset regions meet the execution condition.

30. The apparatus according to claim 25, wherein the matching module is specifically configured to: calculate a first time interval between the leaving moment and the entering moment of each preset region, calculate a sum of all first time intervals to obtain a first total time interval, calculate a first ratio of the first time interval of each preset region to the first total time interval, and calculate a first ratio difference between the first ratio of each preset region and a corresponding first ratio threshold, wherein the first ratio threshold corresponding to each preset region is an average value, obtained by means of calculation, of all first ratios for multiple historical verification operation gestures in a same preset region; and/or calculate a second time interval for the operation gesture sliding from each preset region to an adjacent preset region in a sliding direction of the operation gesture, calculate a sum of all second time intervals to obtain a second total time interval, calculate a second ratio of the second time interval of each preset region to the second total time interval, and calculate a second ratio difference between the second ratio of each preset region and a corresponding second ratio threshold, wherein the second ratio threshold corresponding to each preset region is an average value, obtained by means of calculation, of all second ratios for multiple historical verification operation gestures in a same preset region; and use the first ratio difference and/or the second ratio difference, obtained by means of calculation, of each preset region as a matching result.

31. The apparatus according to claim 30, wherein there are at least two preset regions, and the apparatus further comprises:
a seventh calculation module, configured to calculate an average value of all first ratio differences to obtain a first average ratio difference;
a seventh judging module, configured to determine whether the first average ratio difference is less than a first average ratio difference threshold, wherein the first average ratio difference threshold is obtained by calculating an average value of all first ratio differences corresponding to each historical verification operation gesture, and then by averaging the multiple average values obtained by means of calculation; and
a seventh determining module, configured to: when the first average ratio difference is less than the first average ratio difference threshold, determine that the matching results of all the preset regions meet the execution condition.

32. The apparatus according to claim 30, wherein there are at least two preset regions, and the apparatus further comprises:
an eighth calculation module, configured to: sequence all first ratio differences, and calculate a first limiting rhythm deviation of the operation gesture according to a sequencing result;
an eighth judging module, configured to determine whether a difference between the first limiting rhythm deviation and a first preset limiting rhythm deviation is less than a first deviation threshold, wherein the first deviation threshold is a maximum difference among absolute differences between first limiting rhythm deviations corresponding to the multiple historical verification operation gestures and the first preset limiting rhythm deviation; and
an eighth determining module, configured to: when the difference between the first limiting rhythm deviation and the first preset limiting rhythm deviation is less than the first deviation threshold, determine that the matching results of all the preset regions meet the execution condition.

33. The apparatus according to claim 30, wherein there are at least two preset regions, and the apparatus further comprises:
a ninth calculation module, configured to calculate an average value of all second ratio differences to obtain a second average ratio difference;
a ninth judging module, configured to determine whether the second average ratio difference is less than a second average ratio difference threshold, wherein the second average ratio difference threshold is obtained by calculating an average value of all second ratio differences corresponding to each historical verification operation gesture, and then by averaging the multiple average values obtained by means of calculation; and
a ninth determining module, configured to: when the second average ratio difference is less than the second average ratio difference threshold, determine that the matching results of all the preset regions meet the execution condition.

34. The apparatus according to claim 30, wherein there are at least two preset regions, and the apparatus further comprises:
a tenth calculation module, configured to: sequence all second ratio differences, and calculate a second limiting rhythm deviation of the operation gesture according to a sequencing result;
a tenth judging module, configured to determine whether a difference between the second limiting rhythm deviation and a second preset limiting rhythm deviation is less than a second deviation threshold, wherein the second deviation threshold is a maximum difference among absolute differences between second limiting rhythm deviations corresponding to the multiple historical verification operation gestures and the second preset limiting rhythm deviation; and
a tenth determining module, configured to: when the difference between the second limiting rhythm deviation and the second preset limiting rhythm deviation is less than the second deviation threshold, determine that the matching results of all the preset regions meet the execution condition.

35. The apparatus according to claim 30, wherein there are at least two preset regions, and the apparatus further comprises:
an eleventh calculation module, configured to: calculate an average value of all first ratio differences to obtain a first average ratio difference, and calculate an average value of all second ratio differences to obtain a second average ratio difference;
an eleventh judging module, configured to: determine whether the first average ratio difference is less than a first average ratio difference threshold, and determine whether the second average ratio difference is less than a second average ratio difference threshold; and
an eleventh determining module, configured to: when the first average ratio difference is less than the first average ratio difference threshold, and the second average ratio difference is less than the second average ratio difference threshold, determine that the matching results of all the preset regions meet the execution condition.

36. The apparatus according to claim 30, wherein there are at least two preset regions, and the apparatus further comprises:
a twelfth calculation module, configured to: sequence all first ratio differences, and calculate a first limiting rhythm deviation of the operation gesture according to a sequencing result; and sequence all second ratio differences, and calculate a second limiting rhythm deviation of the operation gesture according to a sequencing result;
a twelfth judging module, configured to: determine whether a difference between the first limiting rhythm deviation and a first preset limiting rhythm deviation is less than a first deviation threshold, and determine whether a difference between the second limiting rhythm deviation and a second preset limiting rhythm deviation is less than a second deviation threshold; and
a twelfth determining module, configured to: when the difference between the first limiting rhythm deviation and the first preset limiting rhythm deviation is less than the first deviation threshold, and the difference between the second limiting rhythm deviation and the second preset limiting rhythm deviation is less than the second deviation threshold, determine that the matching results of all the preset regions meet the execution condition.

37. A terminal, comprising a touchscreen and a processor, wherein
the processor is configured to obtain, by using the touchscreen, an operation rhythm characteristic presented when an operation gesture passes through at least one preset region on the touchscreen of the terminal; and
the processor is further configured to: match an operation rhythm characteristic of each preset region against a corresponding preset rhythm characteristic to obtain a matching result; and when matching results of all preset regions meet an execution condition, control the terminal to execute a preset action corresponding to the operation gesture.
